(19) Europäisches Patentamt
European Patent Office
Office européen des brevets

(11) Veröffentlichungsnummer: **0 053 743**
**B1**

(12) # EUROPÄISCHE PATENTSCHRIFT

(45) Veröffentlichungstag der Patentschrift: **14.05.86**

(51) Int. Cl.⁴: **C 09 B 62/002,** D 06 P 3/66, D 06 P 3/10

(21) Anmeldenummer: **81109755.9**

(22) Anmeldetag: **19.11.81**

(54) **Dioxazin-Reaktivfarbstoffe, Verfahren zu ihrer Herstellung und ihre Verwendung zum Färben und Bedrucken von hydroxyl- oder amidgruppenhaltigen Fasermaterialien.**

(30) Priorität: **02.12.80 DE 3045471**

(43) Veröffentlichungstag der Anmeldung: **16.06.82 Patentblatt 82/24**

(45) Bekanntmachung des Hinweises auf die Patenterteilung: **14.05.86 Patentblatt 86/20**

(84) Benannte Vertragsstaaten: **CH DE FR GB LI**

(56) Entgegenhaltungen:
**CH - A - 477 534**
**FR - A - 1 269 613**
**FR - A - 2 197 947**
**FR - A - 2 397 443**
**GB - A - 837 750**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Harms, Wolfgang, Dr., Walter-Flex-Strasse 21, D-5090 Leverkusen 1 (DE)**
Erfinder: **Wunderlich, Klaus, Dr., Carl-Rumpff-Strasse 21, D-5090 Leverkusen 1 (DE)**

**EP 0 053 743 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Dioxazin-Reaktivfarbstoffe der Formel

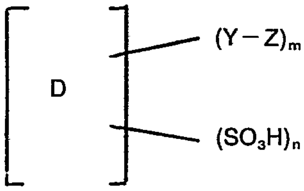

(I)

worin

D = ein- oder mehrwertiger, von einem Dioxazinsystem der Formel

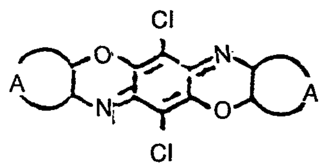

(II)

abgeleiteter Rest

worin

A 1–4 ankondensierte aromatische und/oder heterocyclische Ringe

bedeuten,

und worin

Z = heterocyclischer Reaktivrest,

m = 1 oder 2,

n = 0 bis 4 und

Y für eines der folgenden Brückenglieder steht:

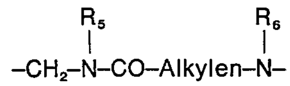

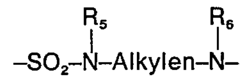

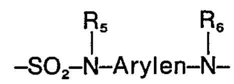

worin

$R_5$ = H; gegebenenfalls durch OH, $SO_3H$, $OSO_3H$, substituiertes $C_1$–$C_4$-Alkyl,

$R_6$ = H; gegebenenfalls durch OH, $SO_3H$, $OSO_3H$, substituiertes $C_1$–$C_4$-Alkyl,

Alkylen = Alkylenreste oder Cycloalkylenreste mit 1 bis 6 Kohlenstoffatomen, welche gegebenenfalls durch O oder S unterbrochen sein können und welche gegebenenfalls durch OH, $SO_3H$, $OSO_3H$ substituiert sein können,

Arylen = gegebenenfalls durch $C_1$–$C_4$-Alkyl, Halogen, $SO_3H$, COOH, $C_1$–$C_4$-Alkoxy substituierte 1,2-,1,3- oder 1,4-Phenylen-Reste.

Beispiele für derartige Dioxazinsysteme sind:

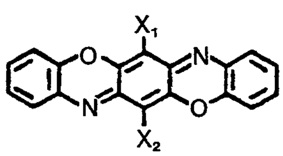

(III)

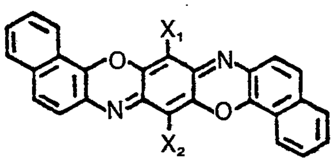

(IV)

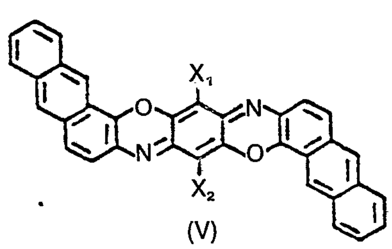

(V)

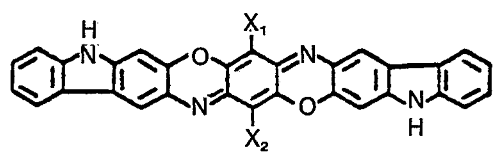

(VIII)

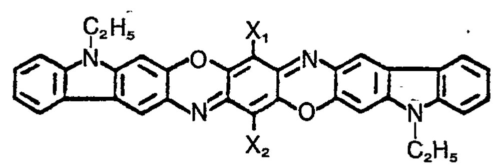

(IX)

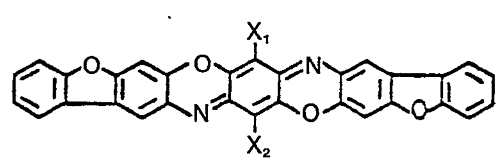

(X)

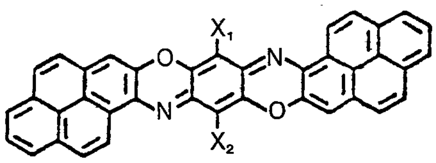

(VI)

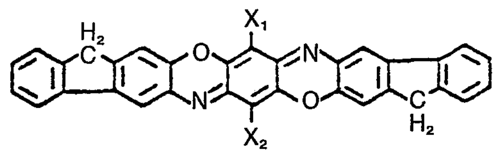

(XI)

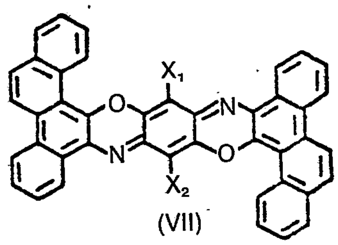

(VII)

$X_1, X_2 = Cl$

Ausser durch –Y–Z und $SO_3H$ können diese Ringsysteme noch weiter substituiert sein, z.B. durch $C_1$–$C_4$-Alkyl, Aryl (insbesondere Phenyl und Naphthyl), $C_1$–$C_4$-Alkoxy, Aryloxy, Halogen, Nitro, Acylamino, Cyan, $NH_2$, gegebenenfalls substituiertes $C_1$–$C_4$-Alkylamino, gegebenenfalls substituiertes Arylamino, $SO_2NH_2$, $SO_2$–NH–Alkyl oder $SO_2N$ $(Alkyl)_2$. Als Substituenten für $C_1$–$C_4$-Alkylamino und Arylamino kommen vorzugsweise in Frage: OH, $SO_3H$, COOH, Halogen. Die Alkylreste in $SO_2$–NH-Alkyl und $SO_2N$ $(Alkyl)_2$ besitzen vorzugsweise 1 bis 4 Kohlenstoffatome.

Geeignete Alkylenreste sind zum Beispiel Methylen, Ethylen, 1,2- und 1,3-Propylen, 1,2-, 1,3-, 1,4- und 2,3-Butylen, 2-Methyl-1,3-propylen, 2,2,-Dimethylpropylen, 1,5-Pentylen, 1,6-Hexylen, 1,3-Cyclohexylen, 1,4-Cyclohexylen, 2-Hydroxy-1,3-propylen, $-CH_2-CH_2-O-CH_2-CH_2-$ und $-CH_2-CH_2-S-CH_2-CH_2$;

Geeignete Arylenreste sind beispielsweise gegebenenfalls durch
$C_1$–$C_4$-Alkyl, Halogen, $SO_3H$, COOH,
$C_2$–$C_4$-Alkoxy substituierte
1,2-, 1,3- oder 1,4-Phenylen-Reste,
wie z.B.
1,2-, 1,3-, 1,4-Phenylen,
3-Methyl-1,2-phenylen,
4-Methyl-1,2-phenylen,
2-Methyl-1,3-phenylen,
4-Methyl-1,3-phenylen,
2-Methyl-1,4-phenylen,
4-Chlor-1,3-phenylen,
2-Chlor-1,4-phenylen,
4-Sulfo-1,3-phenylen,
4-Sulfo-1,2-phenylen,
2-Sulfo-1,4-phenylen,
2,5-Disulfo-1,4-phenylen,
2-Carboxy-1,4-phenylen,
4-Carboxy-1,3-phenylen,
4-Methoxy-1,3-phenylen,
2-Methoxy-1,4-phenylen.

Beispiele für reaktive heterocyclische Reste sind:

2,3-Dichlorchinoxalin-6- oder 7-carbonyl,
2,3-Dichlorchinoxalin-6- oder -7-sulfonyl,
1,4-Dichlorphthalazin-6-carbonyl,
1,4-Dichlorphthalazin-6-sulfonyl,
2,4-Dichlorchinazolin-6- oder -7-sulfonyl,
2,4-Dichlorchinazolin-6-carbonyl,
2,4,6-Trichlorchinazolin-7- oder -8-sulfonyl,
4,5-Dichlor-6-pyridazon-1-yl,
4-(4′,5′-Dichlor-6-pyridazon-1-yl)-benzoyl,
4-(4′,5′-Dichlor-6-pyridazon-1-yl)-phenylsulfonyl,
2,4,5-Trichlorpyrimidin-6-yl,
2,4-Dichlor-5-cyanpyrimidin-6-yl,
2,4-Dichlor-pyrimidinyl-5-carbonyl,
2-Methyl-sulfonyl-5-chlor-6-methylpyrimidin-4-yl,
2-Fluor-5-chlor-6-methylpyrimidin-4-yl,
2,4-Difluor-5-chlorpyrimidin-6-yl,
2,4-Difluor-pyrimidin-6-yl,
2,4-Difluor-pyrimidin-6-yl,
2-Fluor-4,5-dichlor-pyrimidin-6-yl,
3,5,6-Trifluorpyridazin-4-yl,
3,4,5-Trifluorpyridazin-6-yl,
3,6-Dichlorpyridazin-5-carbonyl,
2,4-Dichlor-s-triazinyl,
2,4-Dibrom-s-triazinyl,
2-Chlor-4-amino-s-triazinyl,
2-Fluor-4-amino-s-triazinyl,
2-Chlor-4-methoxy-s-triazinyl,
2-Fluor-4-methoxy-s-triazinyl,
2-Chlor-4-β-methoxy-ethoxy-s-triazinyl,
2-Fluor-4-β-methoxy-ethoxy-s-triazinyl,
2-Chlor-4-phenyl-s-triazinyl,
2-Chlor-4-phenylamino-s-triazinyl,
2-Fluor-4-phenylamino-s-triazinyl,
2-Chlor-4-methyl- und -4-dimethylamino-s-triazinyl,
2-Fluor-4-methyl- und -4-dimethylamino-s-triazinyl,
2-Fluor-4-diethylamino-s-triazinyl,
2-Chlor-4-β-hydroxyethylamino-s-triazinyl,
2-Chlor-4-β-sulfatoethylamino-s-triazinyl,
2-Chlor-4-β-sulfoethylamino-s-triazinyl,
2-Chlor-4-phenoxy-s-triazinyl,
2-Chlor-4-(2′-, 3′- oder

4′-sulfophenylamino)-s-triazinyl,
2-Fluor-4-(2′-, 3′- oder 4′-sulfophenylamino)-s-triazinyl,
2-Chlor-(2′,4′-, 2′,5′-, 3′,5′- oder 3′,4′-disulfophenylamino)-s-triazinyl,
2-Fluor-4-(2′,4′-, 2′,5-, 3′,5- oder 3′,4′-disulfophenylamino)-s-triazinyl,
2-Chlor-4-(2′-,3′- oder 4′-carboxyphenylamino-)-s-triazinyl,
2-Fluor-4-(2′-, 3′- oder 4′-carboxyphenylamino)-s-triazinyl,
2-Fluor-4-(2′,4′-dicarboxyphenylamino)-s-triazinyl,
2-Chlor-4-(2′-carboxy-4′- oder 5′-sulfophenyl-amino)-s-triazinyl,
2-Fluor-4-(2′-carboxy-4′- oder 5′-sulfophenyl-amino)-s-triazinyl,
2-Fluor-4-(2′-methyl-4′,5′-disulfophenylamino)-s-triazinyl,
2-Chlor-4-(1′,5′-, 2′,6′-, 4′,8′-, 5′,7′- oder 6′,8′-disulfo-2′-naphthylamino)-s-triazinyl,
2-Fluor-4-(1′,5′-, 2′,6′-, 4′,8′-, 5′,7′- oder 6′,8′-disulfo-2′-naphthylamino)-s-triazinyl,
2-Chlor-4-(2′,4′-, 3′,7′-, 3′,8′-, 4′,8′-, 5′,7′- oder 6′,8′-disulfo-1′-naphthylamino)-s-triazinyl,
2-Fluor-4-(2′,4′-, 3′,7′-, 3′,8′-, 4′,8′-, 5′,7′- oder 6′,8′-disulfo-1′-naphthylamino)-s-triazinyl,
2-Chlor-4-(1′,5′,7′- oder 3′,6′,8′-trisulfo-2′-naphthylamino)-s-triazinyl,
2-Fluor-4-(1′,5′,7′- oder 3′,6′,8′-trisulfo-2′-naphthylamino)-s-triazinyl,
2-Chlor-4-(3′,5′,7′- oder 3′,6′,8′-trisulfo-1′-naphthylamino)-s-triazinyl.

Hiermit ist die Reihe der Halogen-s-triazinyl-Reste nicht begrenzt. So können in den 2-Halogen-4-alkylamino- oder -4-arylamino-s-triazinyl-Resten und in den 2-Halogen-4-alkoxy- oder 4-aroxy-s-triazinyl-Resten die Alkyl- oder Arlygruppen weiter substituiert sein.

Weiterhin können die reaktiven Halogenatome in den oben genannten 2-Halogen-4-substituierten-triazinyl-Resten unter Bildung quartärer Salze noch gegen tertiäre Basen wie Trimethylamin, Triethylamin, Dimethyl-β-hydroxyethylamin, Triethanolamin, N,N-Dimethylhydrazin, Pyridin, α-,γ-Picolin, Nicotinsäure oder Isonicotinsäure ausgetauscht werden.

Bevorzugte Farbstoffe sind solche der Formeln:

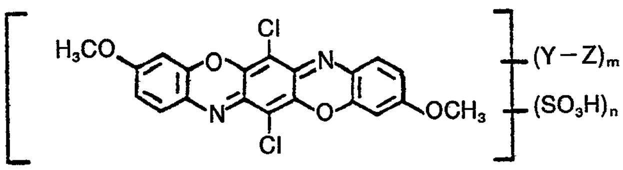

(XII)

und

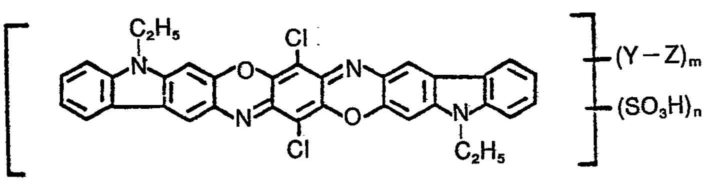

(XIII)

mit

m = 1–2
n = 0–2

Dioxazinsysteme wie III–XI können durch Kondensation von gegebenenfalls entsprechend substituierten 2,5-Dihalogen-1,4-benzochinonen mit aromatischen oder aromatisch-heterocyclischen Aminkomponenten oder auch durch Addition von aromatischen Aminen an substituierte 1,4-Benzochinone und anschliessenden oxidativen oder kondensativen Ringschluss gewonnen werden, dies geschieht nach bekannten Methoden, wie sie vielfach in der Literatur beschrieben sind (K. Venkataraman «The Chemistry of Synthetic Dyes» Vol. II, S. 786, Vol. V, S. 419).

In der genannten Ringsysteme wird das Brükkenglied

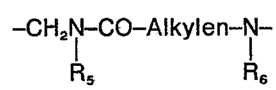

durch Kondensation mit N-Methylolamiden

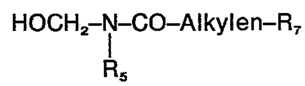

(XIV)

worin $R_7$ H oder ein austauschfähiger Substituent wie z. B. Halogen, Sulfato, Alkylsulfonyl, Arylsulfonyl ist,

in 85–100%iger Schwefelsäure, Oleum, konzentrierter Phosphorsäure oder Phosphorsäure-$P_2O_5$-Gemischen bei 0–50° eingeführt.

Nach anschliessender oder vorheriger Sulfonierung in konzentrierter Schwefelsäure, Oleum, Chlorsulfonsäure, Schwefeltrioxid-Pyridin, Schwefeltrixoid in aliphatischen oder aromatischen Chlorkohlenwasserstoffen, Schwefeltrixoid-Dimethylformamid und Bildung der Verbindungen

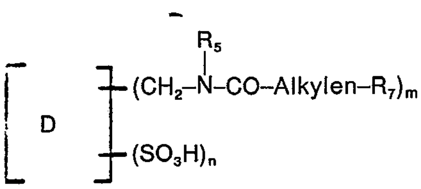
(XV)

worin

D, $R_5$, $R_7$, Alkylen, m und n die oben angegebene Bedeutung haben,

mittels Aminen $R_6$–$NH_2$ ein Austausch von $R_7$ gegen $NHR_6$ zu Verbindungen der Formel

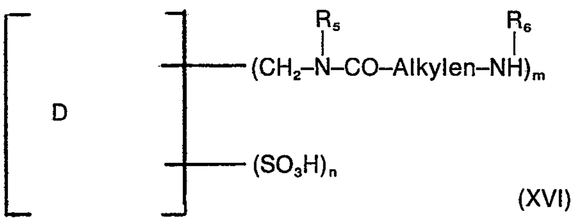
(XVI)

worin

D, $R_5$, $R_6$, Alkylen, m und n die angegebene Bedeutung haben,

durchgeführt werden.

Die Sulfamid-Brückenglieder werden eingeführt durch Sulfochlorierung der obengenannten Ringsysteme beispielsweise mit Chlorsulfonsäure oder Chlorsulfonsäure-Thionylchlorid bei 20–120°, anschliessende Kondensation der Sulfonsäurechloride mit aliphatischen Diaminen oder aromatischen Diaminen der Formeln

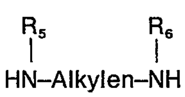
(XVII)

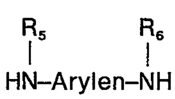
(XVIII)

worin

$R_5$, $R_6$, Alkylen und Arylen die angegebene Bedeutung haben,

in wässrigem, wässrig-organischem oder organischem Medium und anschliessende Verseifung etwa vorhandener überschüssiger Sulfochloridgruppen in alkalischem Medium. Im Falle der aliphatischen und aromatischen Diamine besteht eine Variante in der Kondensation der Sulfochloride mit den Monoacylaminen

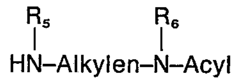
(XIX)

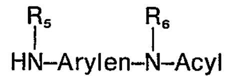
(XX)

worin

Acyl z.B. für Formyl, Acetyl, Oxalyl steht, und der anschliessenden Verseifung etwa vorhandener überschüssiger Sulfochloridgruppen und der Acylaminogruppen in verdünnten Alkalien oder Mineralsäuren.

Eine spezielle Variante zur Herstellung von Zwischenprodukten der Formel

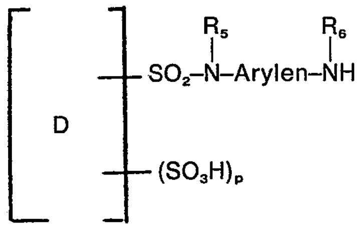
(XXI)

oder

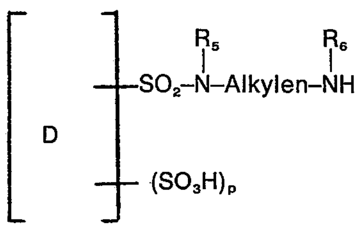
(XXII)

worin

D, $R_5$, $R_6$, Arylen und Alkylen die oben angegebene Bedeutung haben und

p = 0–2 ist,

besteht in der Kondensation von Polyhalogen-1,4-benzochinonen mit Verbindungen der Formel

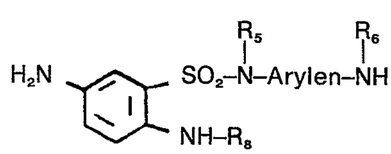
(XXIII)

oder

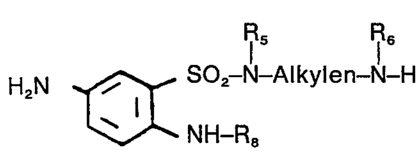
(XXIV)

worin

$R_8 = C_2$–$C_6$-Alkyl oder Cycloalkyl, gegebenenfalls substituiert durch OH, $OCH_3$, $OSO_3H$, $SO_3H$, Halogen,

$R_5$, $R_6$, Alkylen, Arylen die oben angegebene Bedeutung haben und mindestens einer der Reste Alkylen, Arylen oder $R_5$, $R_6$, $R_8$ eine wasserlöslichmachende Gruppe $SO_3H$ oder $OSO_3H$ enthalten muss,

oder in der Addition von Verbindungen der Formel (XXIII) oder (XXIV) an gegebenenfalls substituierte 1,4-Benzochinone zu Zwischenprodukten der Formel

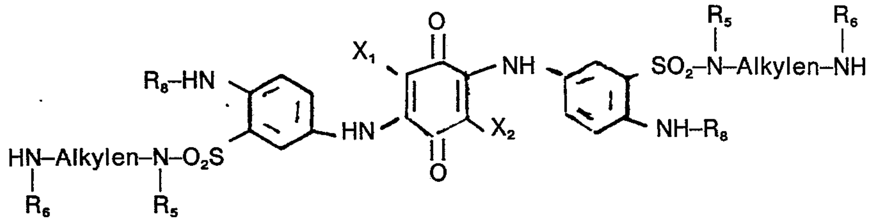

(XXV)

oder

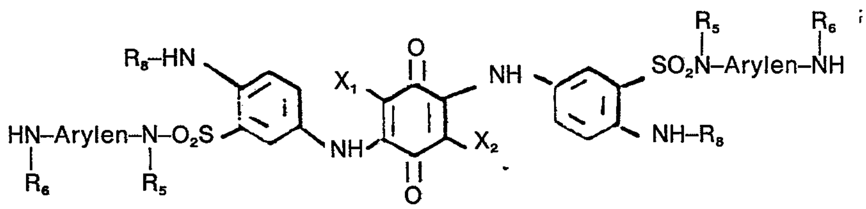

(XXVI)

worin

$R_5$, $R_6$, $R_8$, Alkylen, Arylen, $X_1$ und $X_2$ die oben angegebene Bedeutung haben

und einem anschliessenden oxydativen Ringschluss der Zwischenprodukte XXV und XXVI zu den entsprechend substituierten Dioxazinverbindungen der Formel

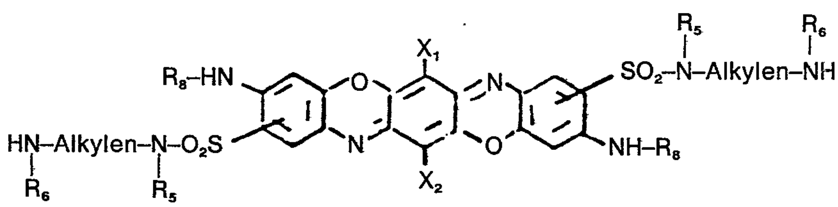

(XXVII)

oder

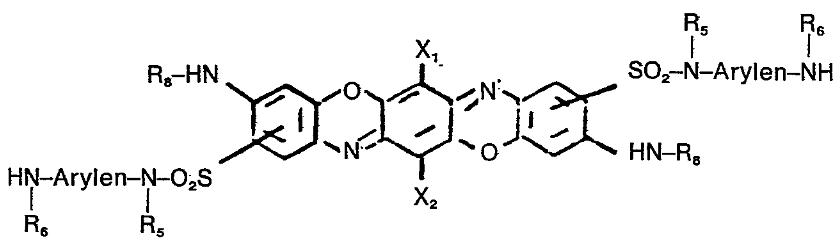

(XXVIII)

Die in allen Fällen erhaltenen Zwischenprodukte der Formel

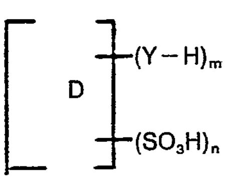

(XXIX)

worin

D, Y m und n die oben angegebene Bedeutung haben und H für Wasserstoff steht und die ebenfalls Gegenstand der Erfindung sind,

werden mit den Reaktivkomponenten

Z-Halogen (XXX)

worin

Z die oben angegebene Bedeutung hat und Halogen F, Cl oder Br ist

kondensiert. Ist Z = Dihalogentriazinyl, so kann in den entstehenden Dihalogentriazinylfarbstoffen je Triazinsystem ein weiteres Halogenatom ausgetauscht werden. Die Kondensation der Dioxazinfarbbasen (XXIX) mit den Reaktivkomponenten (XXX) wird in wässrigem oder wässrig-organischem Medium in Abhängigkeit von der eingesetzten Reaktivkomponente bei Temperaturen von 0–80° und pH-Werten von 3–10 in Gegenwart alkalischer Kondensationsmittel wie wässrigen Alkalicarbonat-, Alkalihydroxid- oder Alkaliphosphatlösungen durchgeführt.

Die neuen Farbstoffe sind äussert wertvolle Produkte die sich für verschiedenste Anwendungszwecke eignen. Als wasserlösliche Verbindungen finden sie bevorzugtes Interesse für das Färben hydroxylgruppenhaltiger und amidgruppenhaltiger Textilmaterialien, insbesondere von Textilmaterialien aus nativer und regenerierter Cellulose, ferner aus Wolle, Seide, synthetischen Polyamid- und Polyurethanfasern.

Die genannten Materialien werden nach den für Reaktivfarbstoffe üblichen Verfahren gefärbt oder bedruckt. Man erhält licht- und nassechte, rote, violette und blaue Färbungen und Drucke.

Bei Temperaturangaben in den Beispielen handelt es sich um °C. Die Formeln der Farbstoffe in der Beschreibung und den Beispielen sind die der freien Säuren. Die Farbstoffe werden im allgemeinen in Form ihrer Alkalisalze, insbesondere der Natrium- oder Kaliumsalze, isoliert und angewandt.

Beispiel 1

17 g Zwischenprodukt der Formel

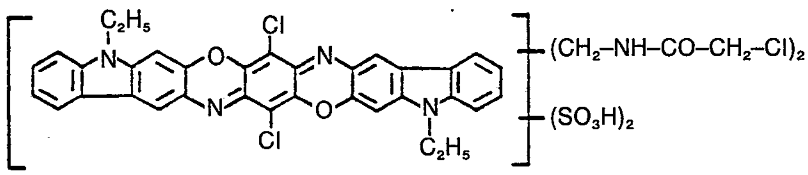

(A)

werden in 200 ml Wasser und 100 ml 30%ige Methylaminlösung eingetragen. Man erwärmt mehrere Stunden auf 50° bis der Chloraustausch in der Seitenkette beendet ist und stellt anschliessend unter Einwerfen von Eis den Ansatz mit konzentrierter Salzsäure sauer. Das ausgefallene Produkt wird abgesaugt und mit 0,1%iger Salzsäure aminfrei gewaschen.

Das erhaltene Produkt wird in 450 ml Wasser bei pH 9,5 gelöst.

11,6 g 2-Aminobenzol-1,4-disulfonsäure werden in 60 ml Wasser bei pH 5 gelöst. Nach Abkühlen auf 0–5° tropft man 4,3 ml Cyanurfluorid zu und hält den pH-Wert mit 2n Soda auf 4,5–5,0. Die erhaltene Lösung der Reaktivkomponente wird bei 0–5° zu der oben hergestellten Lösung der Farbstoffkomponente getropft und der pH-Wert mit 2n Natronlauge auf 8–8,5 gehalten.

Nach beendeter Umsetzung wird die Lösung auf 20° erwärmt und der Farbstoff mit 22% Natriumchlorid ausgesalzen. Man saugt die Fällung ab und trocknet sie unter Zusatz von Phosphatpuffer bei 40° im Vakuum.

Der erhaltene Farbstoff entspricht der Formel

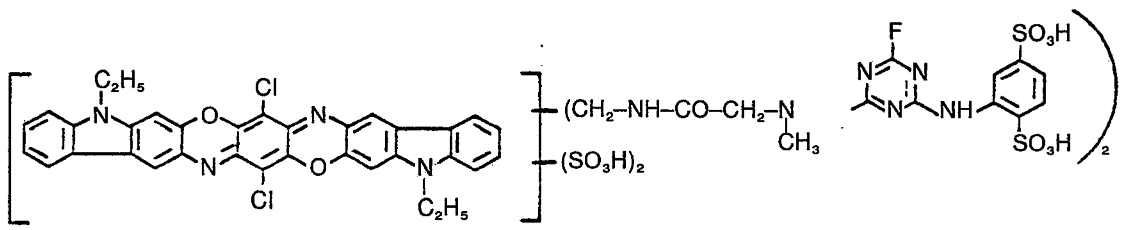

und färbt Cellulosefasern in blauen Tönen.

Herstellung von A

In 90 ml 93%ige Schwefelsäure werden 9,1 Teile N-Methylolchloracetamid bei 0–5° eingetragen. Man trägt anschliessend 20,6 g einer Verbindung der Formel

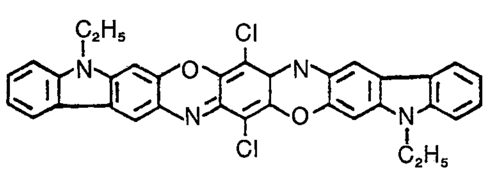

ein und rührt 20 Stunden bei 0–5°. Nach beendeter Kondensation wird der Ansatz auf 700 g Eis ausgetragen, das ausgefallene Produkt abgesaugt, mit Wasser sulfatfrei gewaschen und getrocknet.

21 g des erhaltenen Kondensationsproduktes werden in eine Mischung von 42 ml 96%iger Schwefelsäure und 72 ml 20%igem Oleum bei 15–20° eingetragen. Man lässt 15 Stunden bei 15–20° rühren, gibt die Lösung auf 900 g Eis, saugt ab und wäscht den Filterkuchen mit 500 ml 5%iger Salzsäure.

Beispiel 2

15,0 g der Dioxazinverbindung

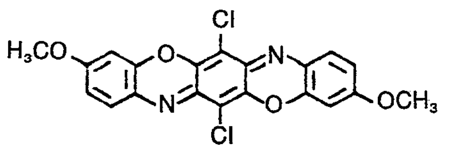

werden in 45 ml konzentrierter Schwefelsäure bei 15–20° eingetragen. Wenn das Produkt gelöst ist, setzt man unter Kühlung 30 ml 20%iges Oleum zu und rührt 1½–2 Stunden nach, bis das Ausgangsprodukt verschwunden ist und die Monosulfonsäure sich gebildet hat.

Man trägt nun 5,5 g N-Methylolchloracetamid ein und rührt 48 Stunden bei 20° nach. Nach beendeter Umsetzung wird auf Eis ausgetragen, das Produkt abgesaugt und mit verdünnter Salzsäure gewaschen. Der feuchte Kuchen wird nun in 250 ml Wasser und 50 ml 30%iger Methylaminlösung auf 45–50° erwärmt, bis der Chloraustausch beendet ist.

Das erhaltene Produkt der Formel

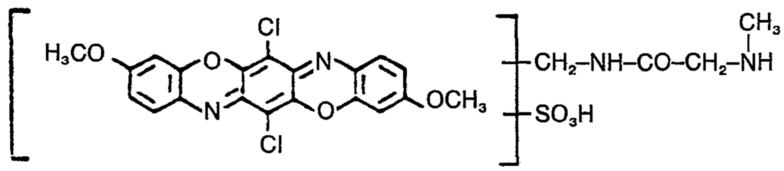

wird durch Aussalzen oder Aussäuern ausgefällt, abgesaugt und gewaschen bis es aminfrei ist.

Das erhaltene Produkt wird bei pH 9,5 in 450 ml Wasser gelöst. Man lässt eine Lösung von 2-(4′,6′-Dichlor-s-triazinylamino)-benzol-1,4-disulfonsäure zutropfen, die in 80 ml Wasser durch Kondensation bei pH 5 und 20°C aus 10,8 g 2-Aminobenzol-1,4-disulfonsäure und 7,9 g Cyanurchlorid hergestellt war, und hält bei 20° den pH-Wert im Reaktionsgemisch auf 7,5–8,5. Nach beendeter Umsetzung salzt man den Farbstoff mit 20% Natriumchlorid aus, saugt ihn ab und wäscht ihn mit Natriumchloridlösung.

Das Produkt der Formel

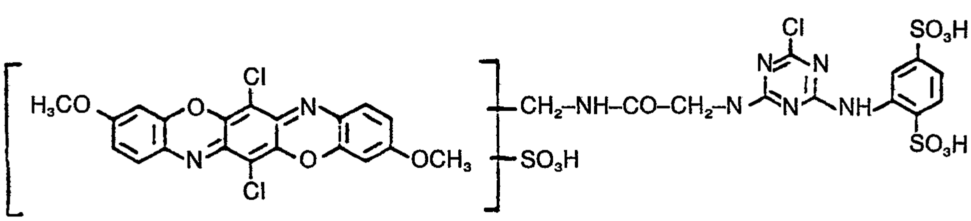

gibt auf Cellulosefasern nassechte rote Drucke und Färbungen.

Beispiel 3

Kondensiert man in Fortführung der vorangegangenen Beispiele die analog hergestellten Dioxazin-Farbbasen der Spalte II, Tabelle 1 mit 1 bzw. 2 Molen der in Spalte III aufgeführten Reaktivkomponenten, so erhält man zum reaktiven Färben und Bedrucken von Cellulosematerialien geeignete Farbstoffe, welche die Farbtöne der Spalte IV ergeben.

Siehe dazu die nachfolgende Tabelle 1.

Tabelle 1

| I | II | III | IV |
|---|---|---|---|
| 1 | 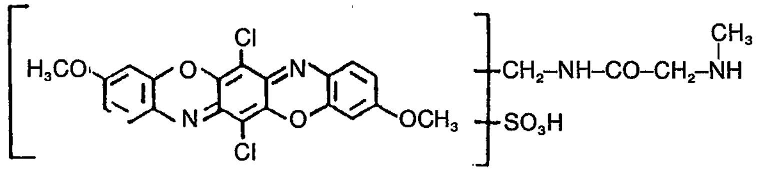 | 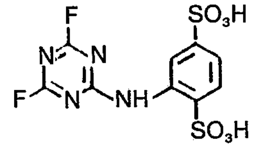 | rot |
| 2 | " " | 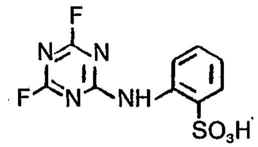 | rot |
| 3 | " " | 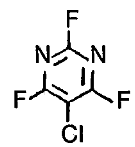 | rot |
| 4 | 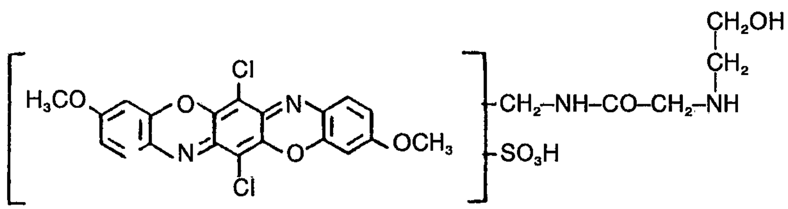 | 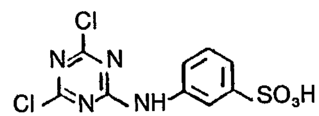 | rot |
| 4 | 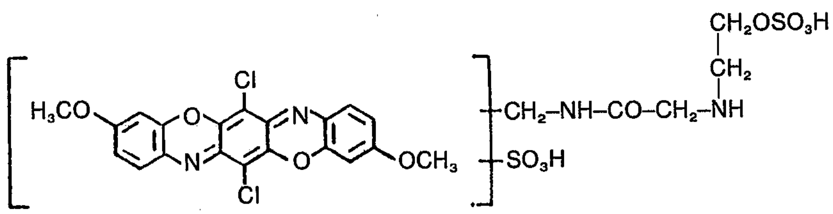 | 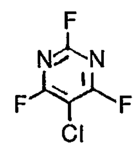 | rot |

Tabelle 1 (1. Fortsetzung)

| I | II | III | IV |
|---|---|---|---|
| 5 | 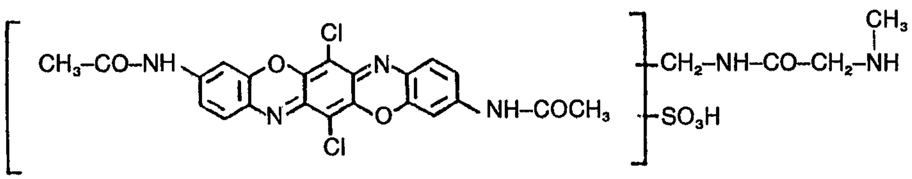 | 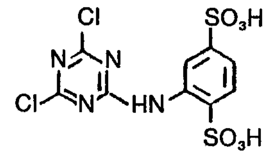 | rot |
| 6 | 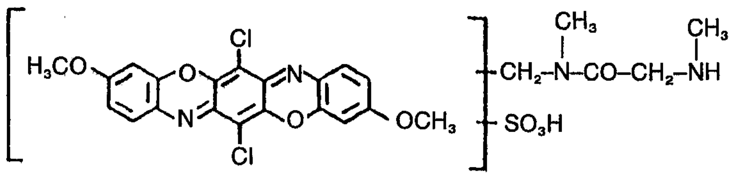 | 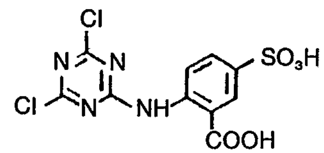 | rot |
| 7 | 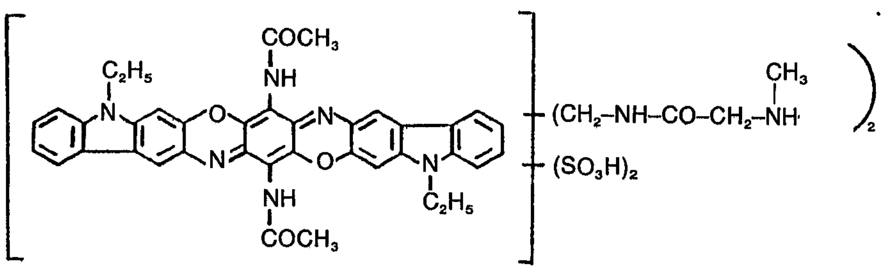 | 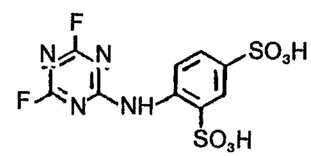 | blau |
| 8 | 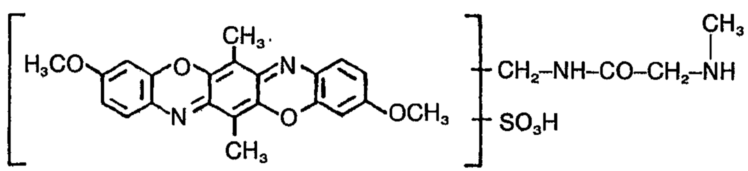 | 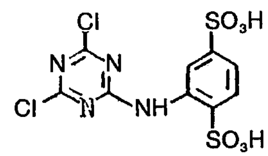 | rot |
| 9 | 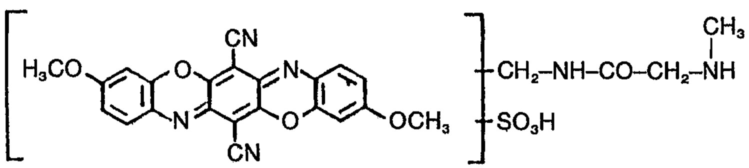 | 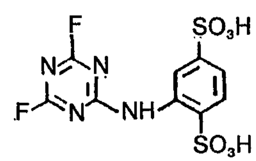 | rot |

Beispiel 4

16,0 g Dioxazin-Verbindung der Formel

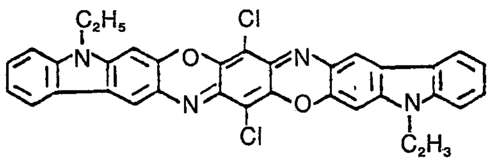

werden in 40 ml Chlorsulfonsäure bei 20–30° eingetragen. Man rührt 1 Stunde nach. Wenn kein Ausgangsprodukt mehr vorhanden ist, gibt man 10 ml Thionylchlorid zu, erwärmt auf 30° und hält 45 Minuten bei dieser Temperatur. Anschliessend lässt man den Ansatz in eine Mischung von 500 g Eis und 100 ml konzentrierte Salzsäure einlaufen, saugt das ausgefällte Bis-sulfochlorid ab und wäscht den Kuchen mit 2 ltr. Eiswasser neutral. Der Filterkuchen wird in eine neutrale Lösung von 12,2 g 2,5-Diaminobenzolsulfonsäure in 500 ml Wasser und 80 ml Ethanol eingetragen. Man hält das Reaktionsgemisch mittels zugesetzter Sodalösung auf pH 7,0–8,0 und lässt 16 Stunden rühren. Das erhaltene Sulfamidkondensationsprodukt der Formel

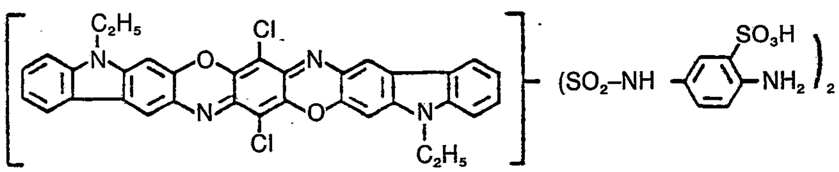

wird mit Natriumchlorid ausgesalzen, abgesaugt, mit verdünnter Natriumchloridlösung gewaschen und bei 70° im Umluftschrank getrocknet.

Beispiel 5

14,0 g Zwischenprodukt des Beispiels 4 werden in 200 ml Wasser und 100 ml N-Methylpyrrolidon gelöst. Nach Abkühlung der Lösung auf 0–5° lässt man 2,8 ml Cyanurfluorid in 5–10 Minuten zutropfen und hält den pH-Wert mit 2n Sodalösung auf 4,5–5,0. Nach beendeter Kondensation setzt man eine neutralisierte Lösung von 6,9 g 3-Aminobenzolsulfonsäure in 70 ml Wasser zu und hält anschliessend den pH-Wert mit 2n Sodalösung auf 6,0–6,2. Ist die Kondensation nach mehrstündigem Nachrühren beendet, wird der Ansatz auf 20° erwärmt. Man salzt den Farbstoff mit 185 g Natriumchlorid aus, saugt die Fällung ab und wäscht den Kuchen mit 650 ml 15%iger Natriumchloridlösung. Das Produkt wird mit Phosphatpuffer angeteigt und im Vakuum bei 40° getrocknet.

Es entspricht der Formel

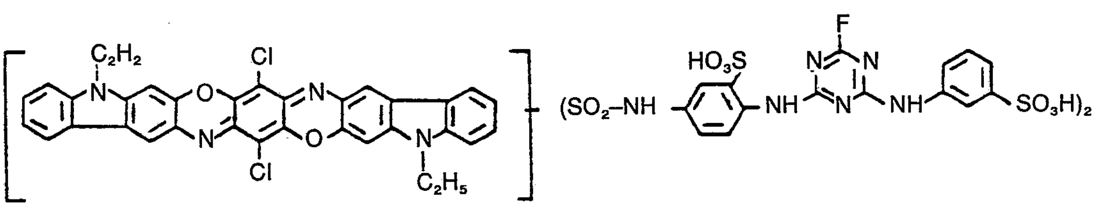

und färbt Cellulosefasern in merklich röter blauen Tönen als der Farbstoff des Beispiels 1.

Beispiel 6

16,0 g Dioxazinverbindung der Formel

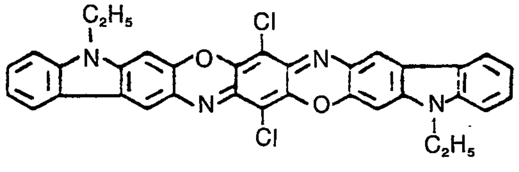

werden wie im Beispiel 4 sulfochloriert. Den erhaltenen Sulfochlorid-Filterkuchen trägt man in eine Lösung von 5,9 g 2,5-Diaminobenzolsulfonsäure in 500 ml Wasser und 80 ml Ethanol ein. Man lässt 15 Stunden bei pH 7,8–8,0 und 20° rührt und erhitzt zum Schluss bei pH 9–10 2 Stunden auf 80°. Das erhaltene Zwischenprodukt wird mit 15% Natriumchlorid ausgesalzen, mit Natriumchloridlösung gewaschen und getrocknet.

15,0 g des erhaltenen Zwischenproduktes werden in 300 ml Wasser gelöst. Man lässt bei 10° eine Lösung von 3,6 g Cyanurchlorid in 50 ml Aceton zutropfen und hält den pH-Wert im Raktionsgemisch auf 5,5. Nach beendeter Kondensation setzt man eine Lösung von 3,4 g 3-Aminobenzolsulfonsäure zu und erwärmt das Reaktionsgemisch auf 35–40°. Dabei wird der pH-Wert auf 6,0–6,5 gehalten. Ist die Umsetzung nach mehreren Stunden beendet, wird der Farbstoff mit Natriumchlorid ausgesalzen, gewaschen und getrocknet. Er entspricht der ungefähren Formel

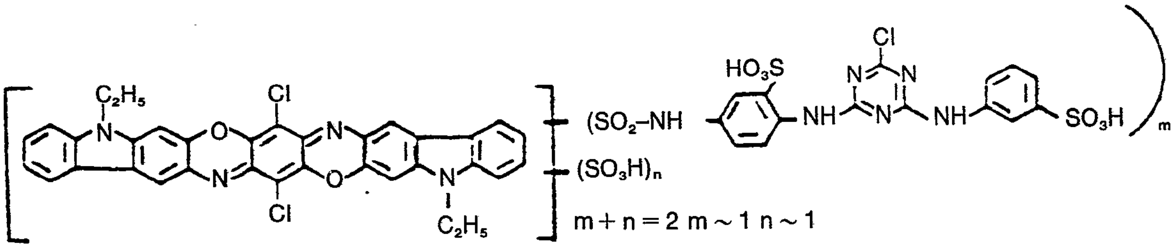

m + n = 2 m ~ 1 n ~ 1

und ergibt auf Cellulosefasern blaue Drucke und Färbungen.

Beispiel 7

Setzt man das im Beispiel 6 hergestellte Zwischenprodukt statt mit Cyanurchlorid mit Cyanurfluorid um und kondensiert anschliessend mit 3-Aminobenzolsulfonsäure wie im Beispiel 75 beschrieben, so erhält man einen ähnlichen Farbstoff der annähernden Formel

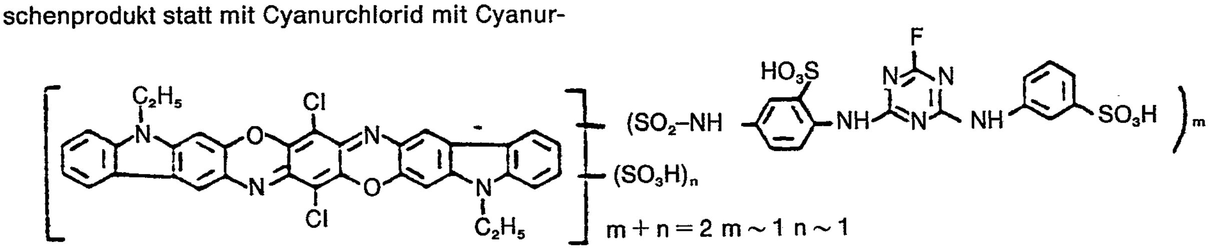

m + n = 2 m ~ 1 n ~ 1

der Cellulosefasern in leicht grüner blauen Tönen als der des Beispiels 5 färbt.

Beispiel 8

16,0 g Dioxazinverbindung der Formel

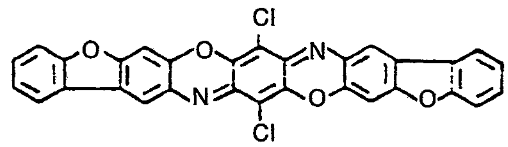

werden analog den Angaben in Beispiel 4 in Chlorsulfonsäure-Thionylchlorid in ein Bissulfochlorid überführt und dieses mit 2,5-Diaminobenzolsulfonsäure in wässrigem Medium kondensiert.

10,5 g des aufgearbeiteten und getrockneten Produktes der Formel

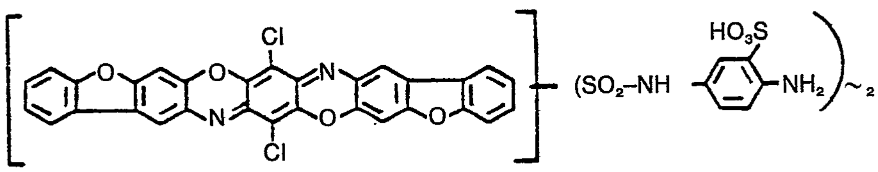

werden in 200 ml Wasser und 50 ml N-Methylpyrrolidon gelöst. Nach Abkühlung auf 0–5° lässt man 2,2 ml Cyanurfluorid zutropfen und hält den pH-Wert mit 1n Sodalösung auf 4,5–5,0. Nach beendeter Kondensation wird eine neutralisierte Lösung von 5,5 g 3-Aminobenzolsulfonsäure in 50 ml Wasser zugesetzt und der pH-Wert bei 0–5° auf 5,8–6,3 gehalten. Wenn die Kondensation nach mehreren Stunden beendet ist, wird die Farbstofflösung auf 20° erwärmt und allmählich mit Natriumchlorid gesättigt.

Der gefällte Farbstoff wird abgesaugt, mit gesättigter Natriumchloridlösung gewaschen und im Vakuum bei 40 °C getrocknet.

Mit dem erhaltenen Farbstoff der Zusammensetzung

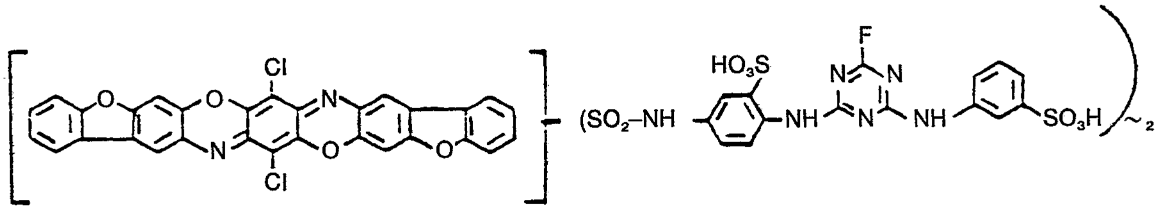

lassen sich Cellulosefasern in rotvioletten Tönen färben und bedrucken.

Beispiel 9)

1 15,0 g Dioxazinverbindung

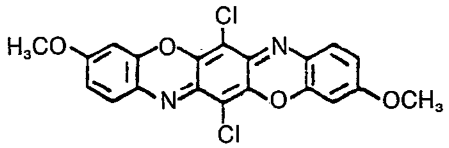

werden in 75 ml Chlorsulfonsäure 10 Stunden auf 50–55 °C gehalten. Man setzt anschliessend 21 ml Thionylchlorid bei 45 °C zu und hält noch 2 Stunden bei dieser Temperatur. Danach wird der Ansatz auf eine Mischung von 900 g Eis, 150 ml Wasser und 60 ml konzentrierte Salzsäure gegeben. Man saugt den Niederschlag ab und wäscht ihn mit Wasser sulfatfrei.

Man trägt den erhaltenen Filterkuchen des Bissulfochlorids in eine neutralisierte Lösung von 16,0 g 2,5-Diaminobenzolsulfonsäure in 300 ml Wasser ein und hält den pH-Wert mit Sodalösung auf 7,5. Nach 3 Stunden erwärmt man das Reaktionsprodukt auf 60°C, hält 5 Stunden bei dieser Temperatur und setzt dann 30 ml Pyridin zu und erwärmt auf 80 °C.

Nach beendeter Umsetzung wird das Reaktionsprodukt durch Aussalzen isoliert, abgesaugt und getrocknet. 24,0 g des erhaltenen Produktes werden in 750 ml Wasser gelöst. Man lässt bei 0–5 °C 5,1 ml Cyanurfluorid zutropfen und hält den pH-Wert mit 2n Sodalösung auf 5,0–5,5. Man rührt zur Beendigung der Kondensation 30 Minuten bei 0–5 °C nach und setzt anschliessend eine neutrale Lösung von 12,0 g 3-Aminobenzolsulfonsäure in 150 ml Wasser bei 0–5 °C zu und hält den pH-Wert mit Sodalösung auf 6,0–6,2. Ist die Umsetzung beendet, erwärmt man unter pH-Kontrolle auf 20 °C und salzt den Farbstoff mit 20% Natriumchlorid aus, saugt ab und wäscht ihn mit gesättigter Natriumchloridlösung.

Der Filterkuchen wird mit Phosphatpuffer angeteigt und im Vakuum bei 40 °C getrocknet.

Der Farbstoff entspricht annähernd der Formel

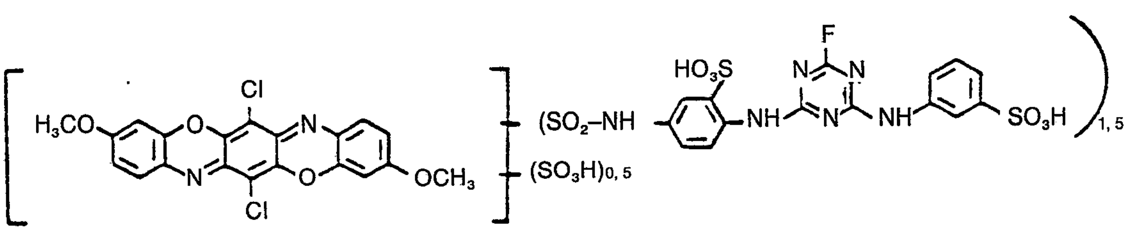

Mit ihm lässt sich Baumwolle in nassechten roten Tönen bedrucken oder färben.

Kondensiert man an Stelle der Farbstoff-Zwischenprodukte der Beispiele 4–9 die in Tabelle 2 Spalte II aufgeführten Verbindungen mit den Reaktivkomponenten der Spalte III, so erhält man Farbstoffe, mit denen sich Cellulosematerialien nach den für Reaktivfarbstoffe üblichen Techniken in den angegebenen Tönen färben oder bedrukken lassen.

Siehe dazu die nachfolgende Tabelle 2.

Tabelle 2

| I | II | III | IV |
|---|---|---|---|
| 1 | 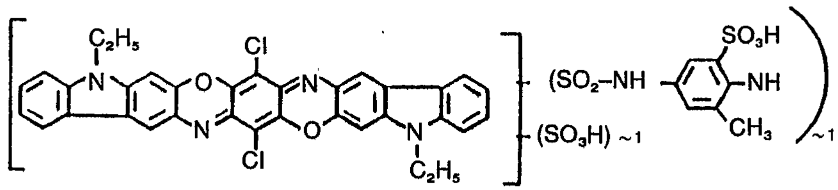 | 1. 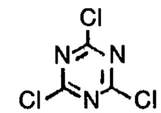 2. 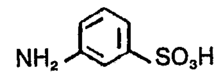 | rotstichig blau |
| 2 | 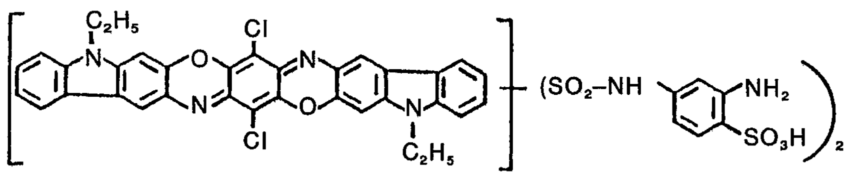 | 1. 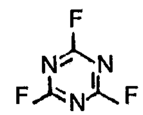 2. 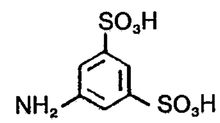 | rotstichig blau |
| 3 | 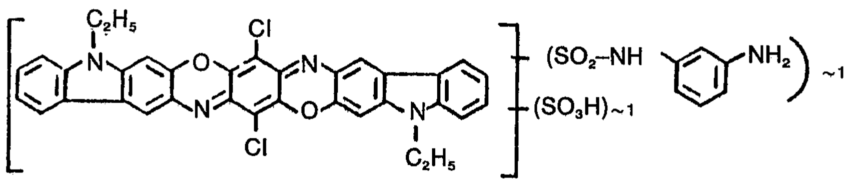 | 1. 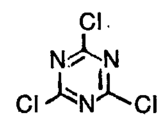 2. 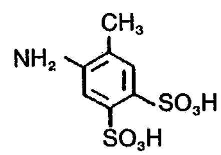 | rotstichig blau |
| 4 | 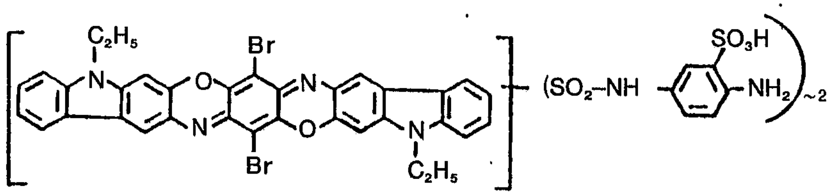 | 1. 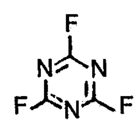 2. 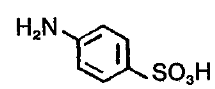 | rotstichig blau |

Tabelle 2 (1. Fortsetzung)

| I | II | III | IV |
|---|---|---|---|
| 5 | 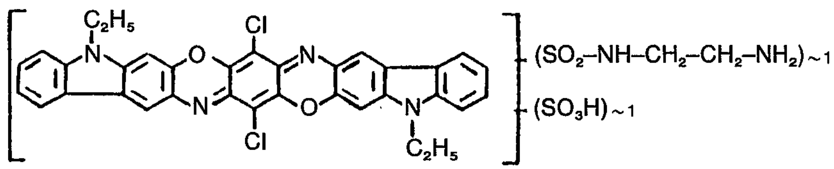 | 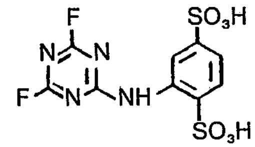 | rotstichig blau |
| 6 | 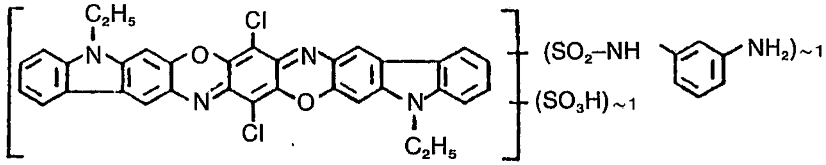 | 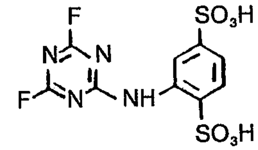 | rotstichig blau |
| 7 | 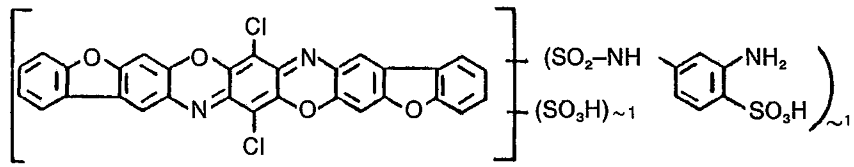 | 1. 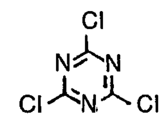 2. 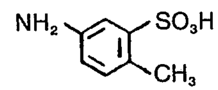 | rotviolett |
| 8 | 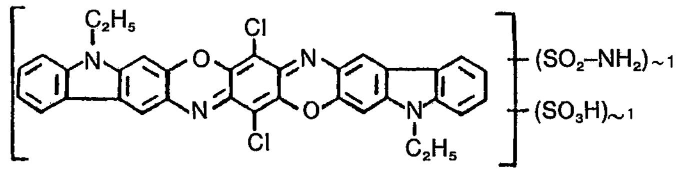 | 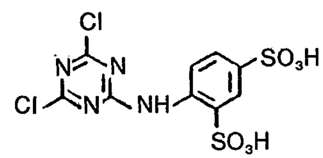 | rotstichig blau |
| 9 | 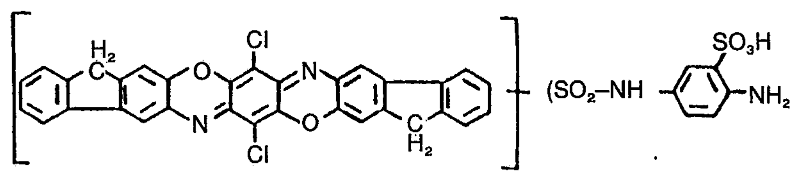 | 1. 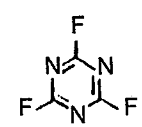 2. 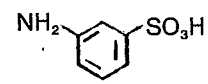 | rötlich violett |

Tabelle 2 (2. Fortsetzung)

| I | II | III | IV |
|---|---|---|---|
| 10 | 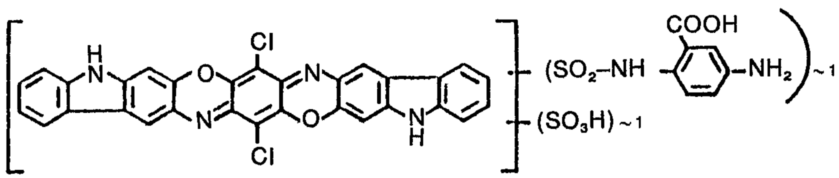 | 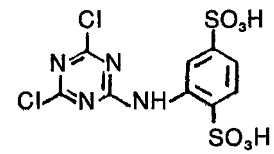 | blau-violett |
| 11 | 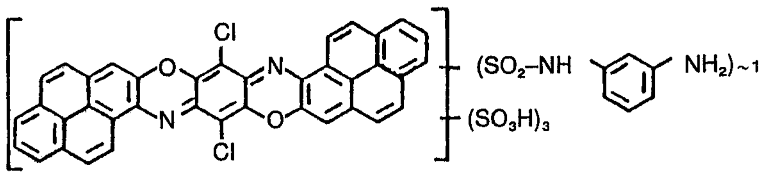 | 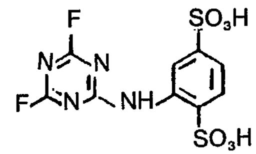 | blau |
| 12 | 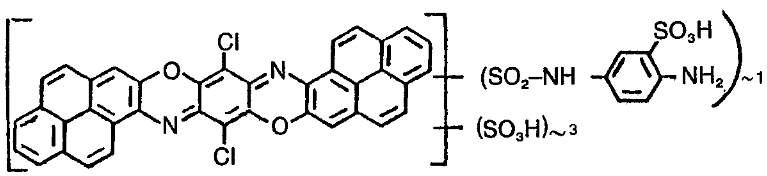 | 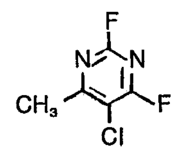 | blau |
| 13 | 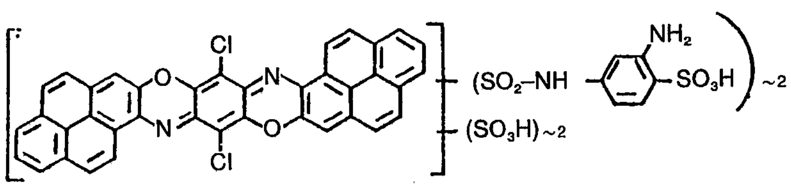 | 1. 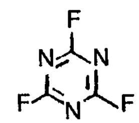 2. 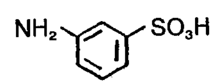 | blau |
| 14 | 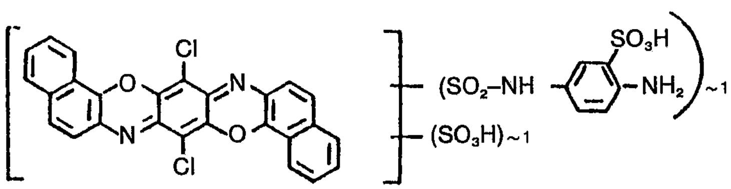 | 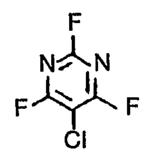 | rot |

Tabelle 2 (3. Fortsetzung)

| I | II | III | IV |
|---|---|---|---|
| 15 | 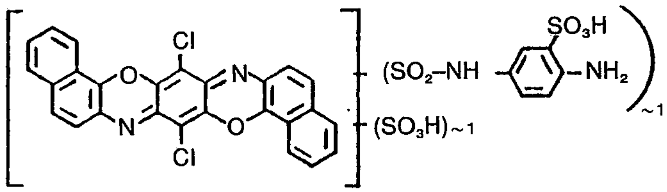 | 1. 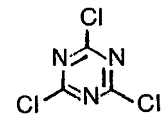 2. 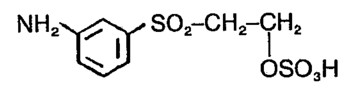 | rot |
| 16 | 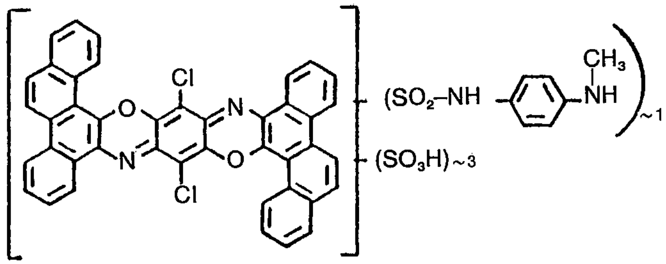 | 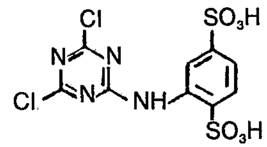 | grünstichig blau |
| 17 | 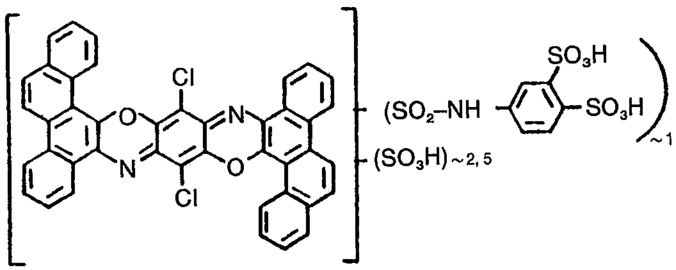 | 1. 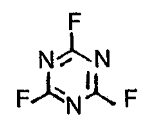 2. 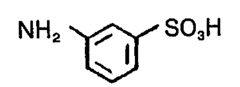 | grünstichig blau |
| 18 | 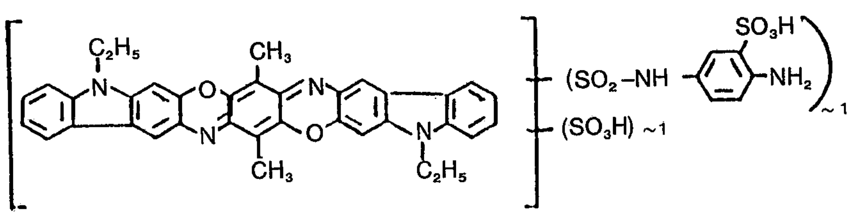 | 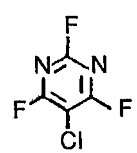 | blau |

Tabelle 2 (4. Fortsetzung)

| I | II | III | IV |
|---|---|---|---|
| 19 | 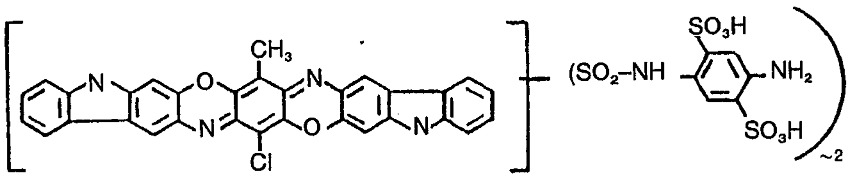 | 1. 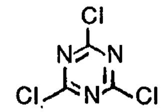 2. 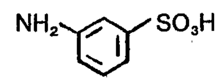 | rotstichig blau |
| 20 | 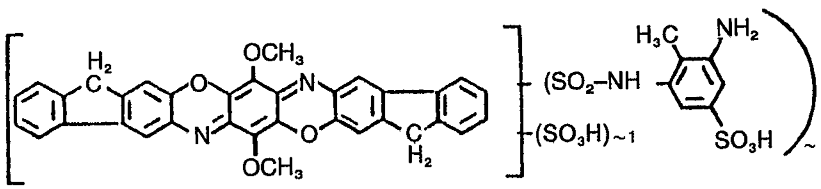 | 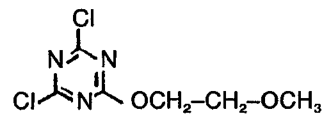 | violett |
| 21 | 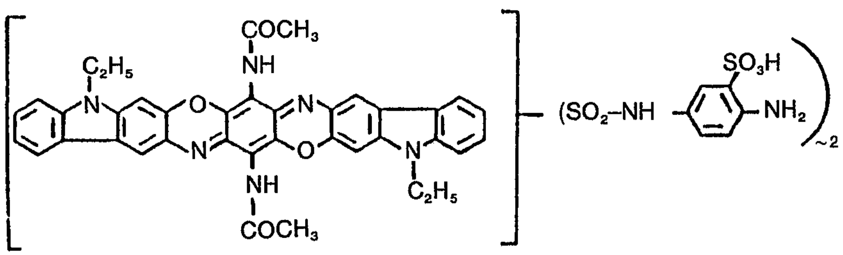 | 1. 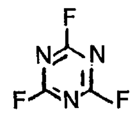 2. 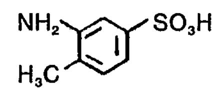 | blau |
| 22 | 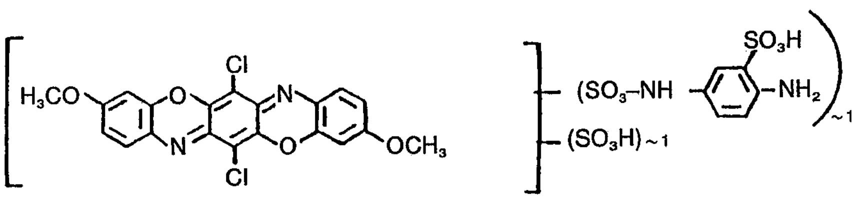 | 1. 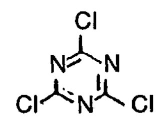 2. 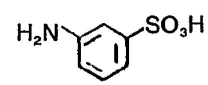 | rot |
| 23 | 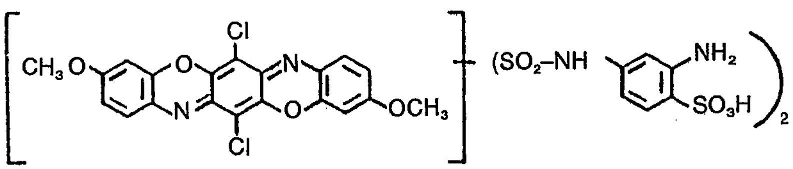 | 1. 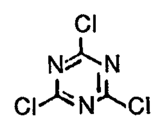 2. 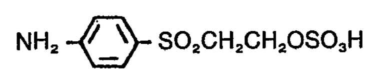 | rot |

Tabelle 2 (5. Fortsetzung)

| I | II | III | IV |
|---|---|---|---|
| 24 | 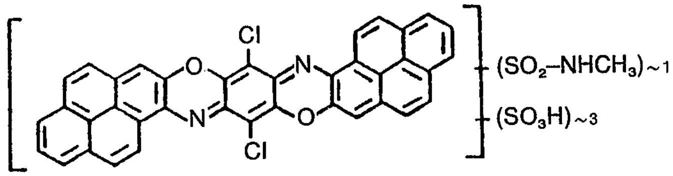 | 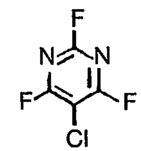 | blau |
| 25 | 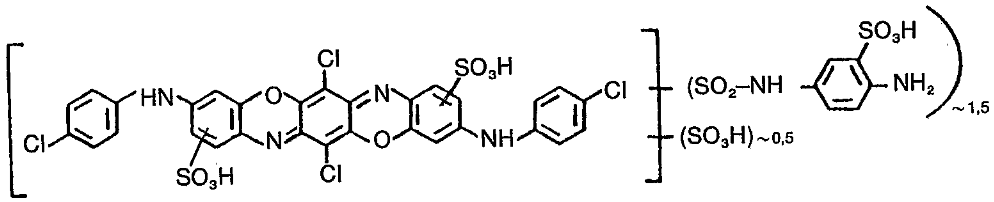 | 1. 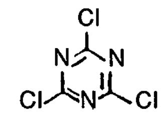 2. 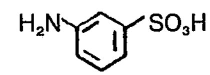 | blau |
| 26 | 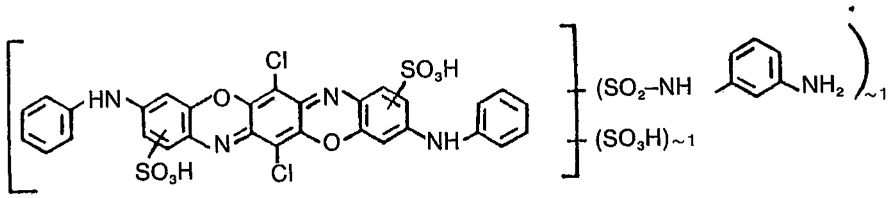 | 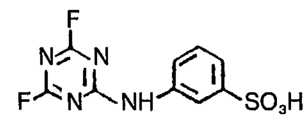 | blau |
| 27 | 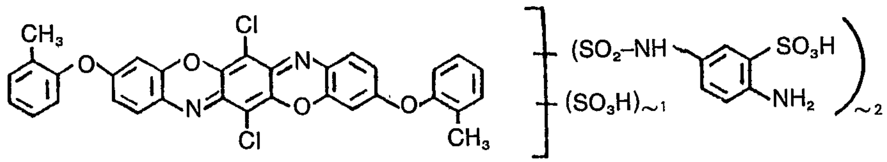 | 1. 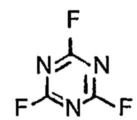 2. 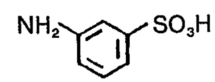 | rot |
| 28 | 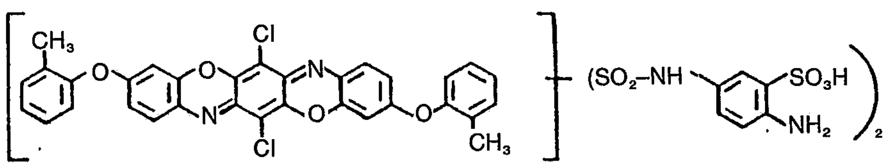 | 1. 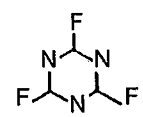 2. 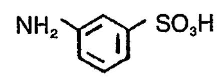 | rot |

Tabelle 2 (6. Fortsetzung)

| I | II | III | IV |
|---|---|---|---|
| 29 | 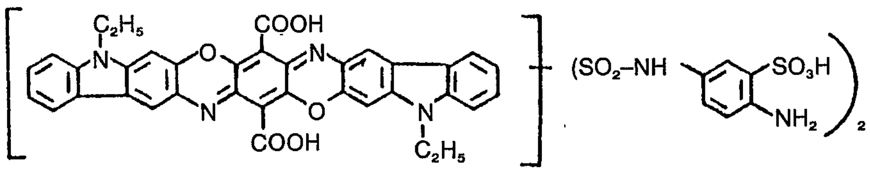 | 1. 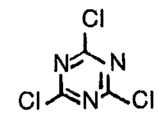<br>2. 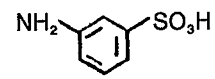 | blau |
| 30 | 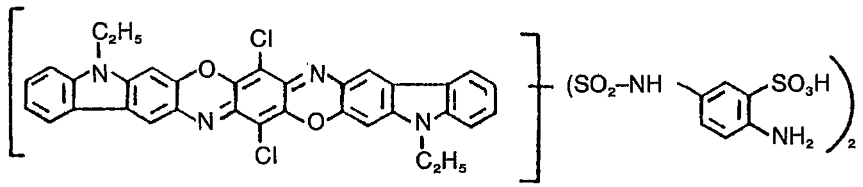 | 1. 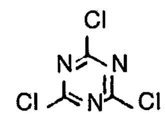<br>2. 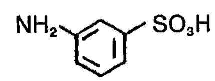<br>3. 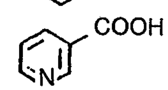 | blau |
| 31 | 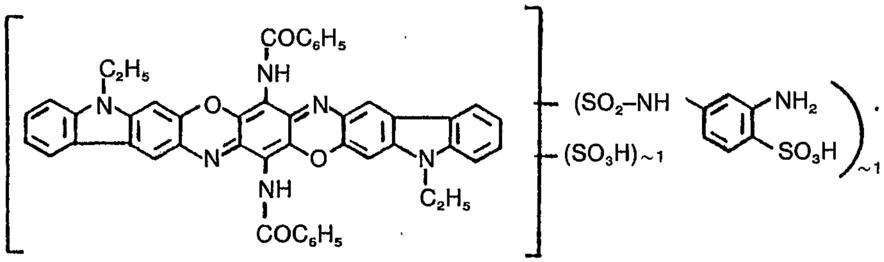 | 1. 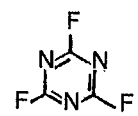<br>2. 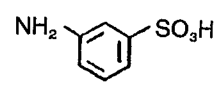 | rotstichig blau |
| 32 | 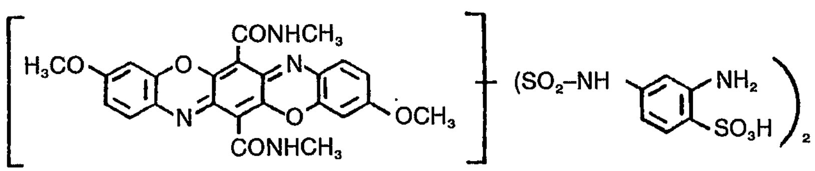 | 1. 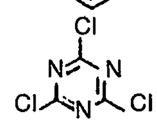<br>2. 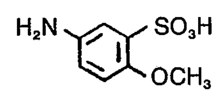 | rot |
| 33 | 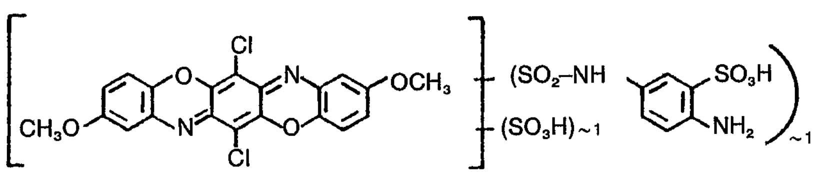 | 1. 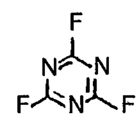<br>2. 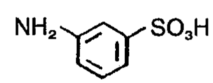 | blaustichig rot |

Beispiel 10

A. 16,0 g Dioxazin-Zwischenprodukt der Formel

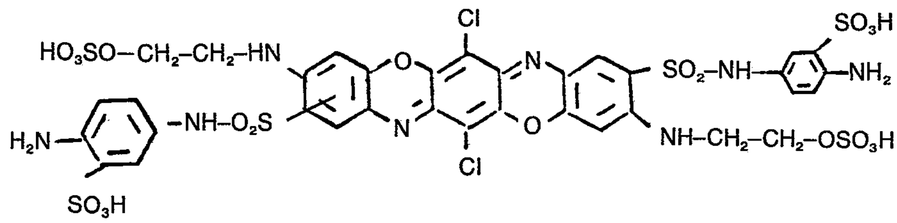

werden in 360 ml Wasser durch Neutralisieren bis zum pH-Wert 6 gelöst. Zur Lösung lässt man bei 0–5° 3,2 ml Cyanurfluorid innerhalb 5 Minuten zutropfen und hält den pH-Wert mit 2n Sodalösung auf 4,5–4,8. Man rührt 30 Minuten nach und setzt anschliessend eine neutralisierte Lösung von 8,7 g 3-Aminobenzolsulfonsäure in 80 ml Wasser ein. Nunmehr wird der pH-Wert mit Sodalösung auf 6,0–6,2, die Temperatur weiter auf 0–5° gehalten. Nach beendeter Kondensation erwärmt man auf 20° und salzt den Farbstoff mit 75 g Kaliumchlorid aus. Die Fällung wird abgesaugt und mit 25%iger Kaliumchloridlösung gewaschen, mit Phosphatpuffer angeteigt und in Vakuum bei 50 °C getrocknet. Der Farbstoff der Formel

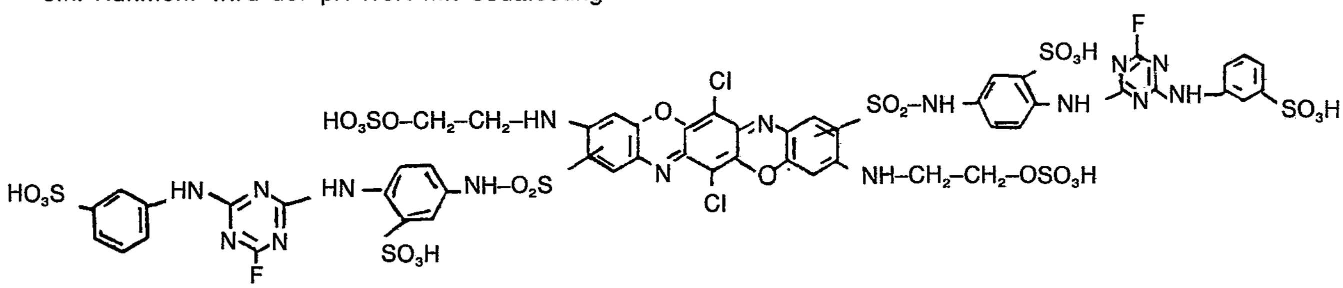

gibt auf Cellulosefasern klare, blaue Färbungen und Drucke mit guten – sehr guten Nassechtheiten.

B. Das eingesetzte Dioxazin-Zwischenprodukt wird folgendermassen hergestellt:

34,6 g 5-Amino-2-β-hydroxyethylamino-benzolsulfonsäure-(4′-amino-3′-sulfo-phenylamid) werden in 250 ml Wasser bei pH 6 gelöst. Man erwärmt auf 45–50° und gibt eine Suspension von 10,5 g 2,3,5,6-Tetrachlorbenzochinon in 30 ml Ethanol zu der Lösung. Durch Zutropfen von 2n Sodalösung wird der pH-Wert auf 6,0–6,3 gehalten. Nach einigen Stunden ist die Kondensation beendet. Der angefallene braune Niederschlag wird abgesaugt, mit 5%iger Natriumchloridlösung gewaschen und getrocknet.

C. 31,0 g des unter B erhaltenen Kondensationsproduktes werden bei 15–20° in 150 ml 20%iger Oleum eingetragen. Man rührt kurze Zeit nach, bis alles gelöst ist und trägt nun innerhalb 20 Minuten 15,3 g Kaliumperoxidisulfat ($K_2S_2O_8$) ein. Dabei hält man die Temperatur durch gelegentliche, leichte Kühlung auf 20–25°. Nach beendetem Ringschluss wird die Lösung auf 750 g Eis gegeben. Aus der blauen Lösung salzt man das Dioxazin-Zwischenprodukt durch Zusatz von 125 g Kaliumchlorid aus, vervollständigt die Abscheidung durch mehrstündiges Nachrühren, saugt ab und wäscht den Filterkuchen mit 25%iger Kaliumchloridlösung sulfatfrei. Der Filterkuchen wird im Umluftschrank bei 60° getrocknet.

Beispiel 11

Ersetzt man in Beispiel 10 das Cyanurfluorid durch 5,4 g Cyanurchlorid und verfährt in übrigen analog, so erhält man einen blauen Farbstoff, der auf Cellulosegewebe ebenfalls nassechte Drucke und Färbungen liefert.

Beispiel 12

15,0 g Dioxazin-Zwischenprodukt der Formel

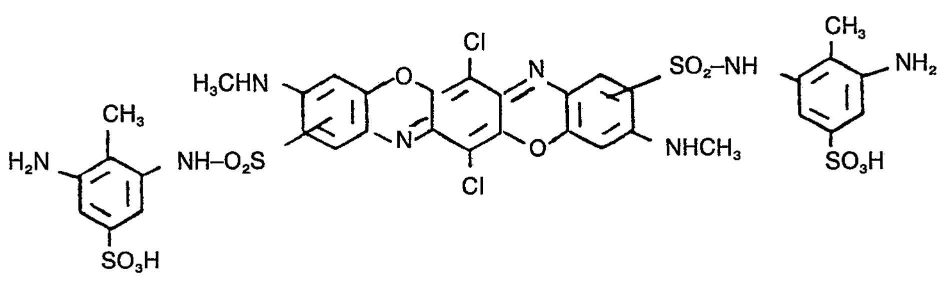

werden in 200 ml Wasser durch Neutralisation gelöst. Zu dieser Lösung lösst man bei 0–5° die Lösung einer Reaktivkomponente in 30 Minuten zutropfen, die durch Umsetzung von 8,7 g 3-Aminobenzolsulfonsäure mit 4,7 ml Cyanurfluorid in der in Beispiel 1 geschilderten Weise hergestellt war. Man hält den pH-Wert im Reaktionsgemisch mit 2n Soda auf 5,8–6,0 und hält diese Bedingungen mehrere Stunden bis zur Beendigung der Kondensation ein, die man chromatographisch feststellt. Anschliessend wird die Lösung auf 20° erwärmt. Nach etwa 12 Stunden ist die Kondensation beendet. Der entstandene Farbstoff wird mit Natriumchlorid ausgesalzen, abgesaugt, der Filterkuchen mit 10%iger Natriumchloridlösung gewaschen und getrocknet. Der erhaltene Farbstoff der Formel

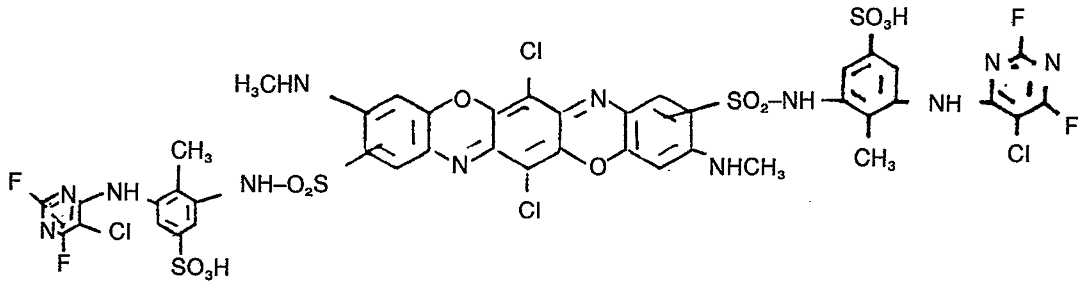

färbt Cellulosefasern, z.B. aus langer Flotte in kräftigen Blautönen mit guten Nassechtheiten.

Beispiel 13

17,0 g Dioxazin-Zwischenprodukt der Formel (hergestellt analog Beispiel 10 B–C).

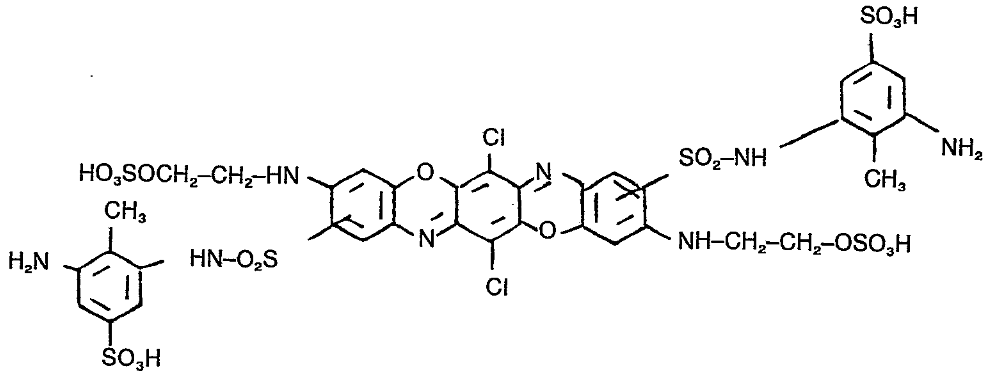

werden in 200 ml Wasser neutralisiert bie zu pH 6. Man lässt diese Lösung bei 0–5° zu einer Suspension tropfen, die durch Lösen von 5,5 g Cyanurchlorid in 25 ml Aceton und Eingiessen in 70 ml Eis-Wasser hergestellt war. Dabei hält man den pH-Wert mit 2n Sodalösung auf 4,5–5. In die nach beendeter Umsetzung geklärte Lösung werden 5,2 g 3-Aminobenzolsulfonsäure eingetragen. Man hält nun den pH-Wert auf 6,0–6,4 und erwärmt das Reaktionsgemisch auf 25–30°. Nach beendeter Umsetzung wird der Farbstoff mit Natriumchlorid ausgesalzen, abgesaugt, mit 25%iger Natriumchloridlösung gewaschen und getrocknet. Er entspricht der Formel

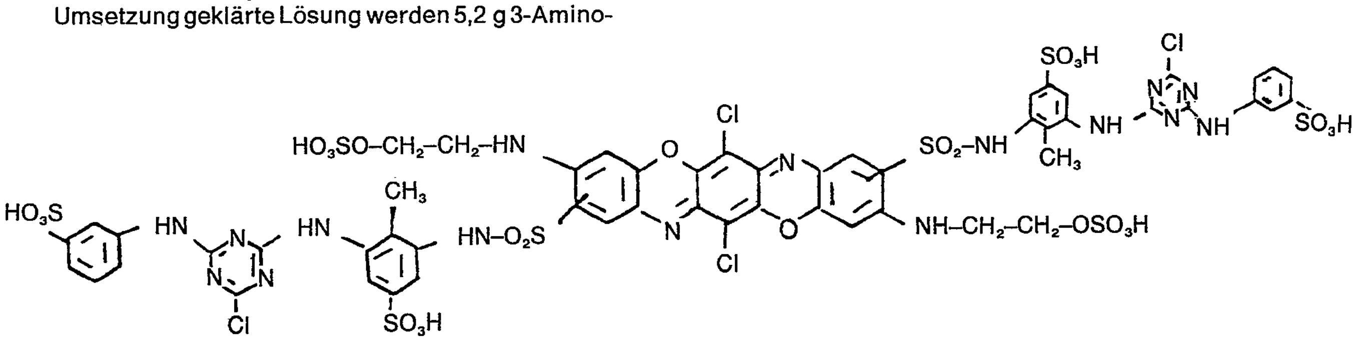

und gibt auf Cellulosefasern klare, blaue Drucke und Färbungen mit guten Nassechtheiten.

Setzt man die in Tabelle 3, 2. Spalte, aufgeführten Dioxazinkomponenten mit den Reaktionskomponenten der Spalte 3 um, so erhält man weitere Reaktivfarbstoffe, welche auf Cellulosefasern nassechte, klare, blaue Färbungen und Drucke ergeben.

Tabelle 3

| Beispiel Nr. | Dioxazinkomponente | Reaktivkomponente |
|---|---|---|
| 1 | 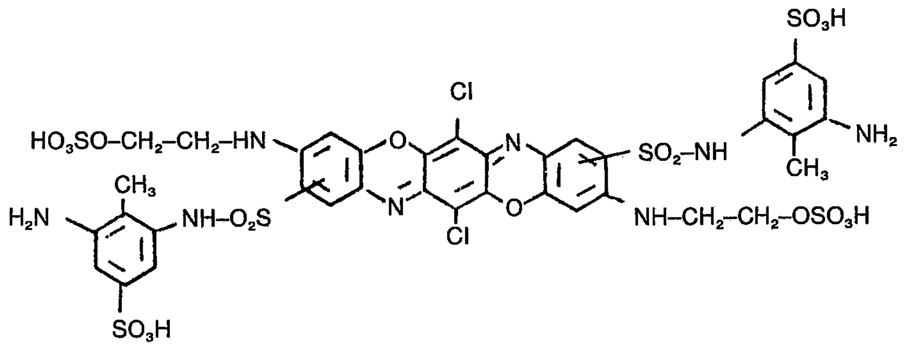 | 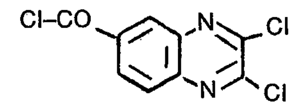 |
| 2 | 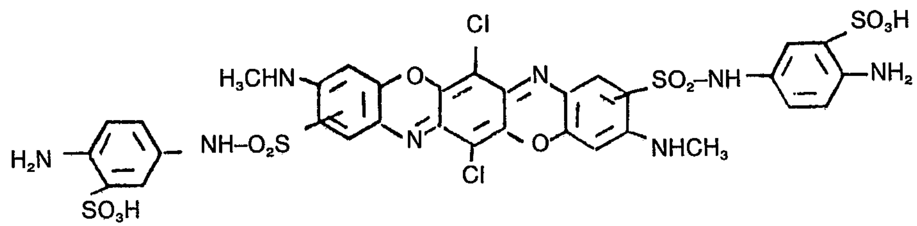 | 1.) 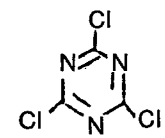 2.) 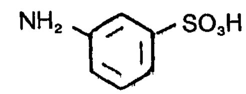 |
| 3 | 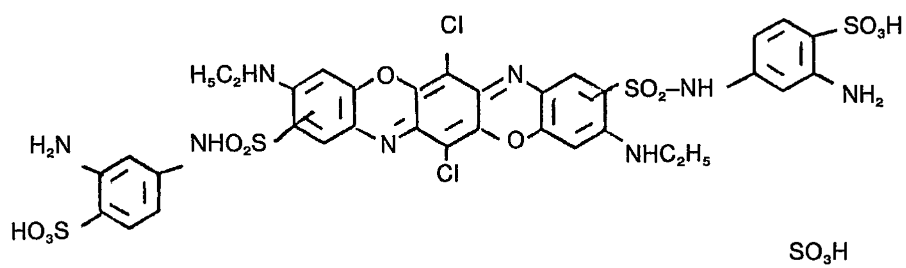 | 1.) 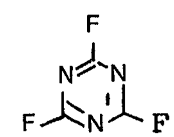 2.) 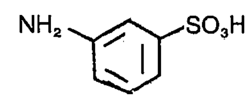 |
| 4 | 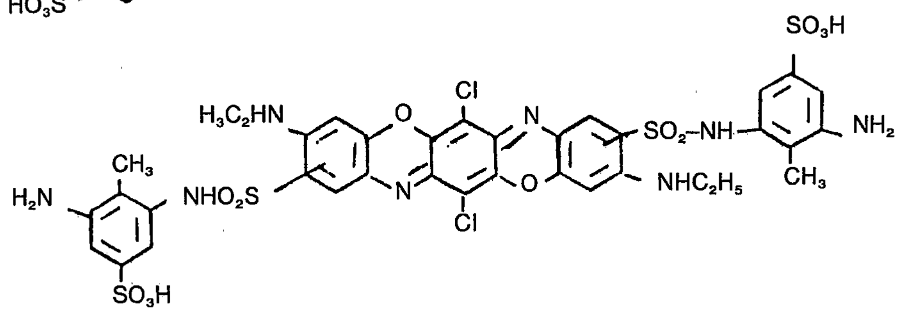 | 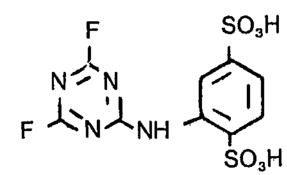 |

Tabelle 3 (Fortsetzung)

| Beispiel Nr. | Dioxazinkomponente | Reaktivkomponente |
|---|---|---|
| 5 | 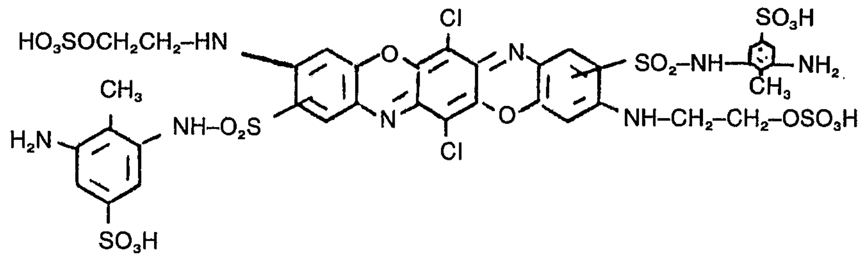 | 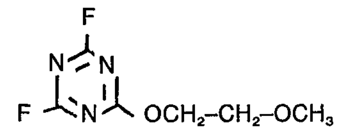 |
| 6 | " | 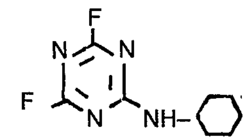 |
| 7 | " | 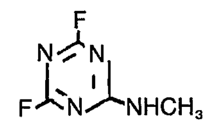 |
| 8 | " | 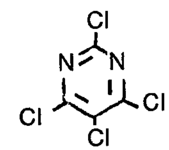 |
| 9 | " | 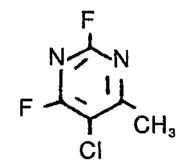 |
| 10 | 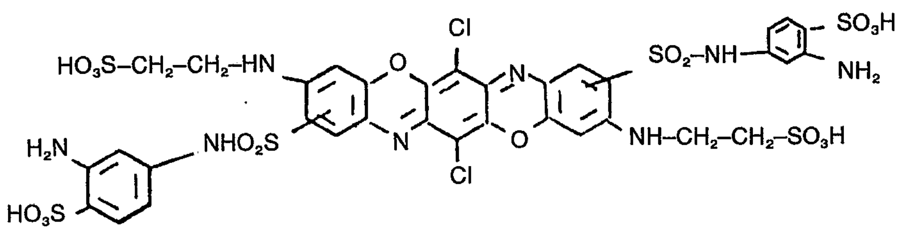 | 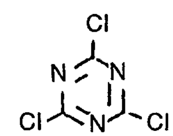 |

Tabelle 3 (Fortsetzung)

| Beispiel Nr. | Dioxazinkomponente | Reaktivkomponente |
|---|---|---|
| 11 | 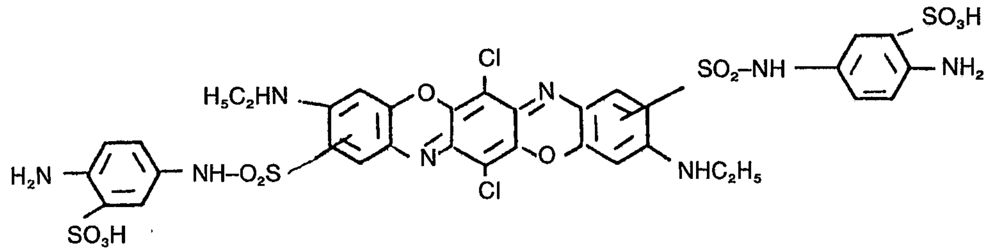 | 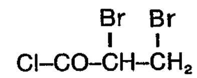 |
| 12 | 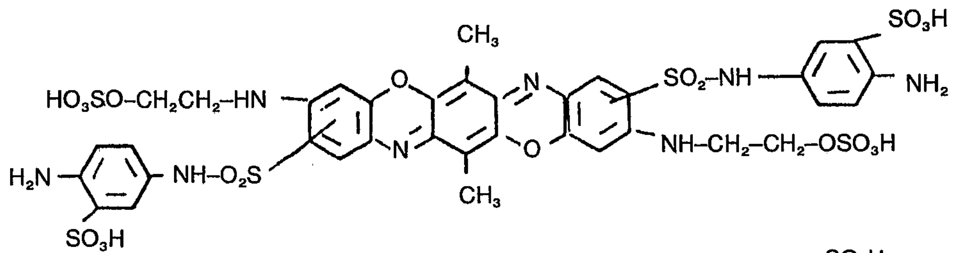 | 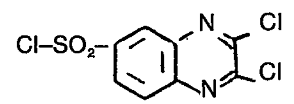 |
| 13 | 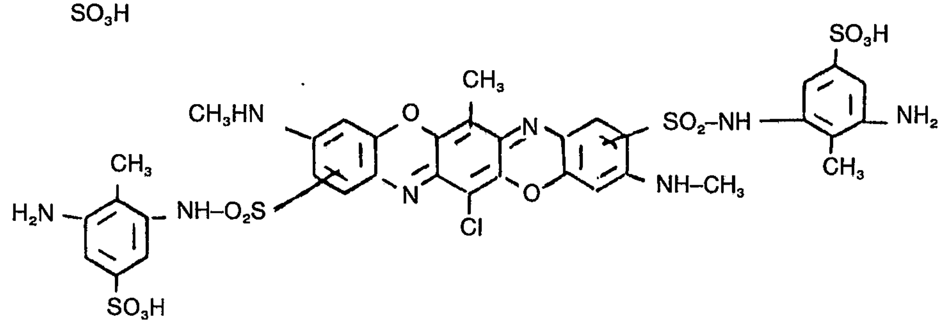 | 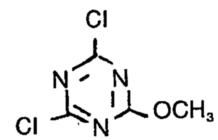 |
| 14 | 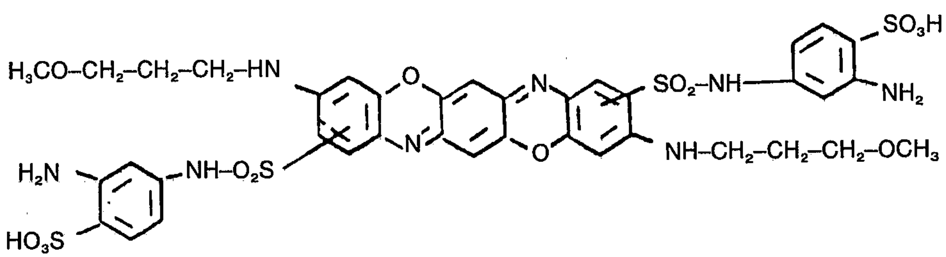 | 1.) 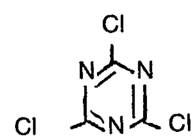 2.) 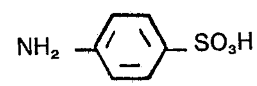 |

Tabelle 3 (Fortsetzung)

| Beispiel Nr. | Dioxazinkomponente | Reaktivkomponente |
|---|---|---|
| 15 | 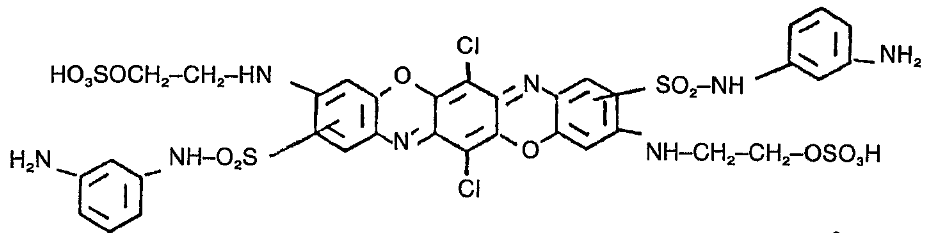 | 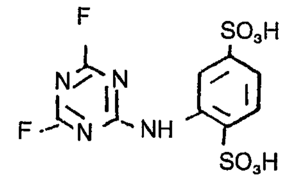 |
| 16 | 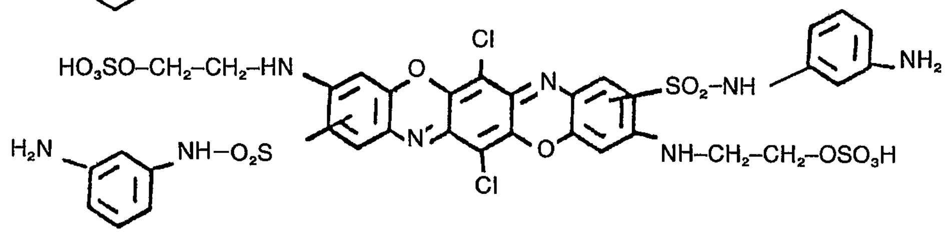 | 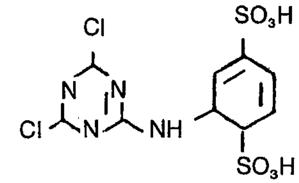 |
| 17 | " | 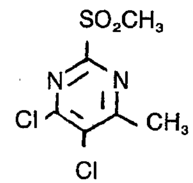 |
| 18 | 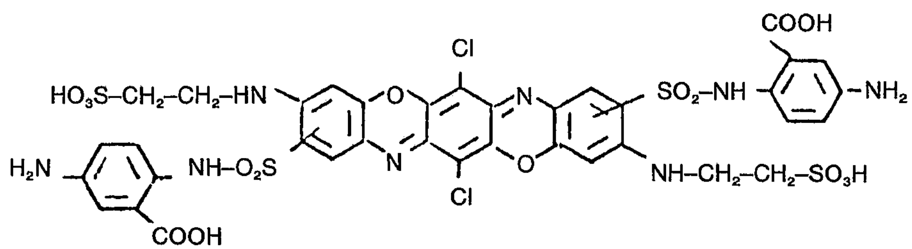 | 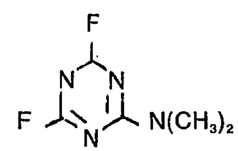 |
| 19 | 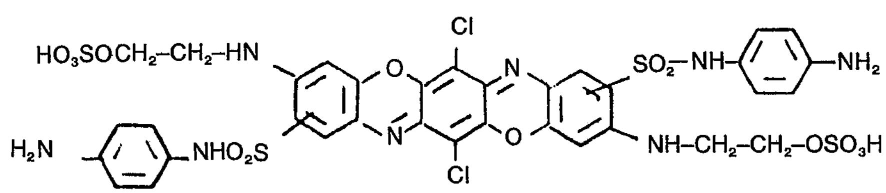 | 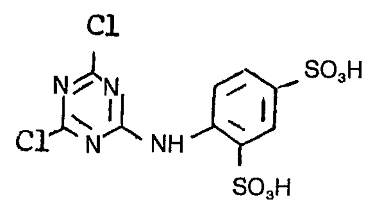 |

Tabelle 3 (Fortsetzung)

| Beispiel Nr. | Dioxazinkomponente | Reaktivkomponente |
|---|---|---|
| 20 | 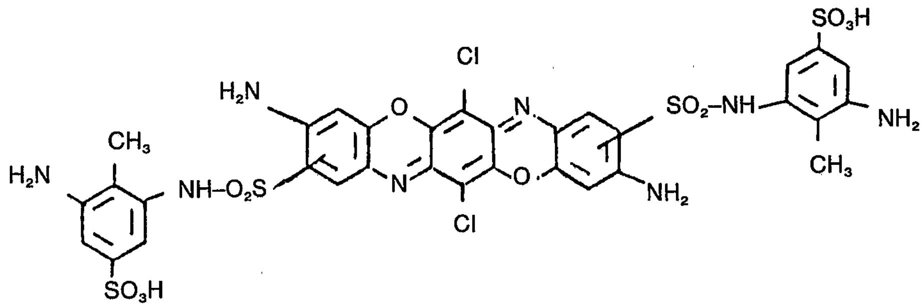 | 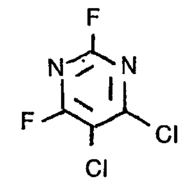 |
| 21 | " | 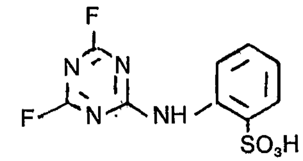 |
| 22 | " | 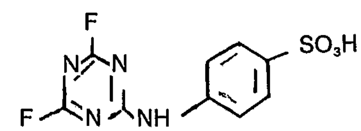 |
| 23 | 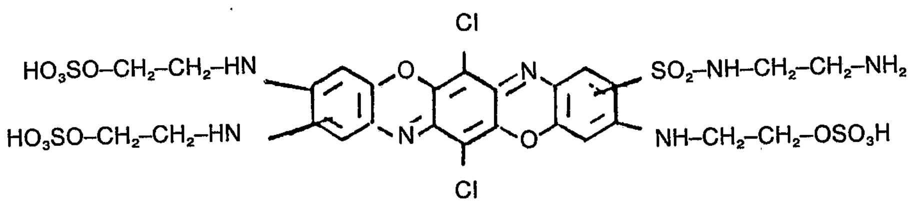 | 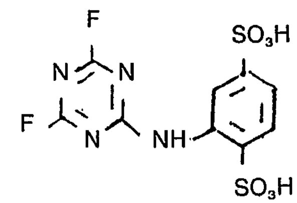 |
| 24 | " | 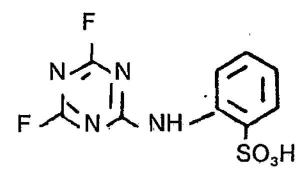 |

Tabelle 3 (Fortsetzung)

| Beispiel Nr. | Dioxazinkomponente | Reaktivkomponente |
|---|---|---|
| 25 | 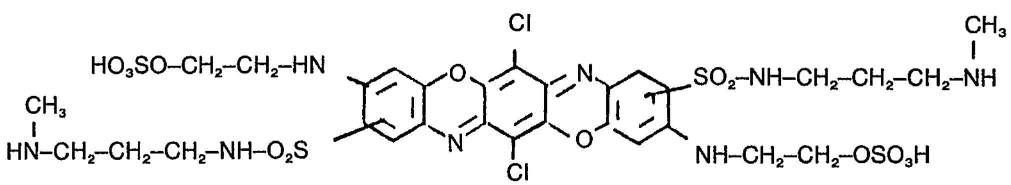 | 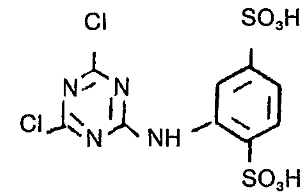 |
| 26 | 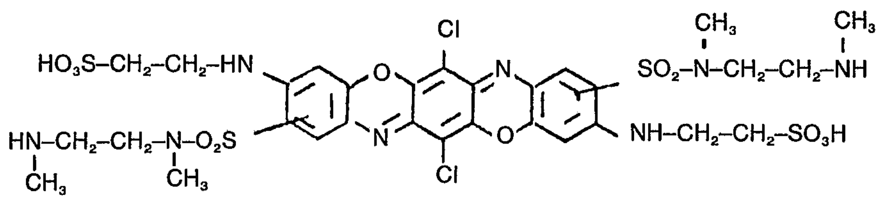 | 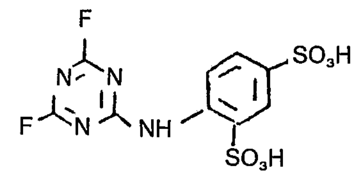 |
| 27 | 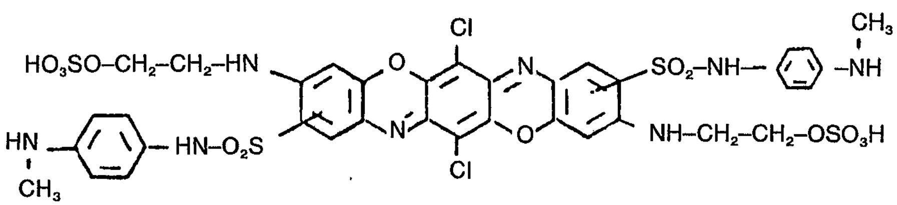 | 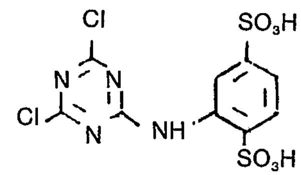 |
| 28 | 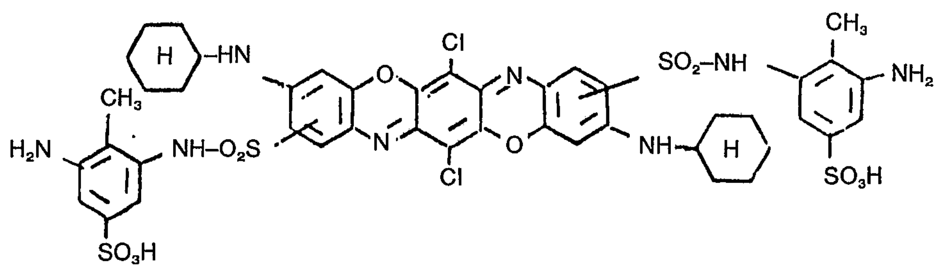 | 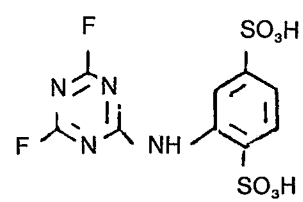 ; |

Tabelle 3 (Fortsetzung)

| Beispiel Nr. | Dioxazinkomponente | Reaktivkomponente |
|---|---|---|
| 29 | 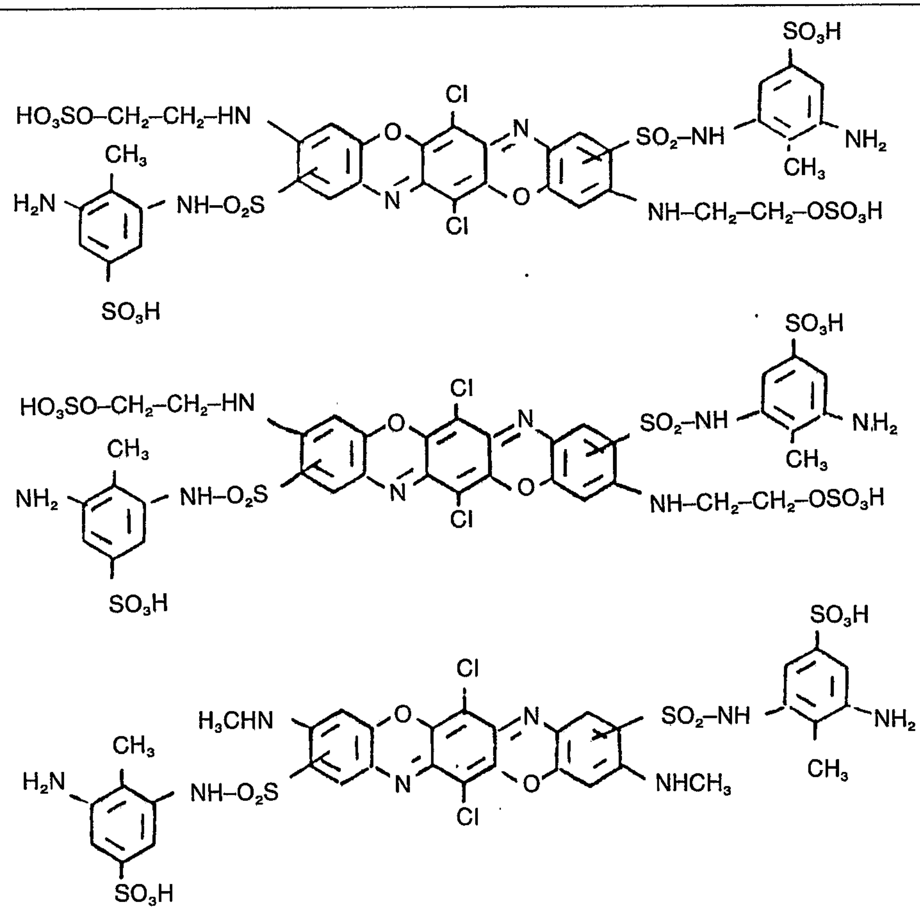 | 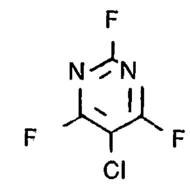 |
| 30 | | 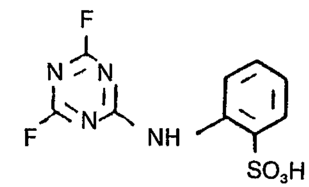 |
| 31 | | " |
| 32 | 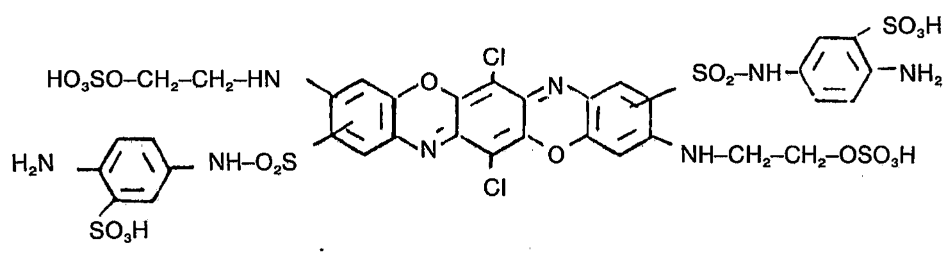 | 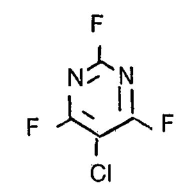 |

**Patentansprüche**

1. Dioxazin-Reaktivfarbstoffe der Formel

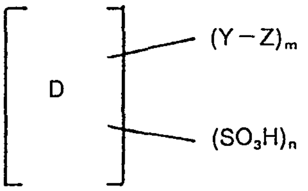

(I)

worin

D = ein- oder mehrwertiger, von einem Dioxazinsystem der Formel

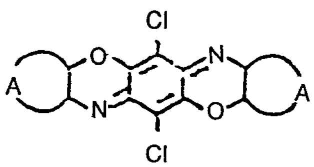

(II)

abgeleiteter Rest

wobei

A 1–4 ankondensierte aromatische und/oder heterocyclische Ringe

und worin

Z = heterocyclischer Reaktivrest,

m = 1 oder 2,

n = 0 bis 4 und

Y für eines der folgenden Brückenglieder steht:

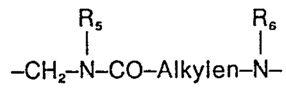

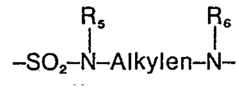

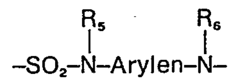

worin

$R_5$ = H; gegebenenfalls durch OH, $SO_3H$, $OSO_3H$, substituiertes $C_1$–$C_4$-Alkyl,

$R_6$ = H; gegebenenfalls durch OH, $SO_3H$, $OSO_3H$ substituiertes $C_1$–$C_4$-Alkyl,

Alkylen = Alkylenreste oder Cycloalkylenreste mit 1 bis 6 Kohlenstoffatomen, welche gegebenenfalls durch O oder S unterbrochen sein können und welche gegebenenfalls durch OH, $SO_3H$, $OSO_3H$ substituiert sein können,

Arylen = gegebenenfalls durch $C_1$–$C_4$-Alkyl, Halogen, $SO_3H$, COOH, $C_1$–$C_4$-Alkoxy substituierte 1,2-, 1,3- oder 1,4-Phenylen-Reste.

2. Dioxazin-Reaktivfarbstoffe der Formel

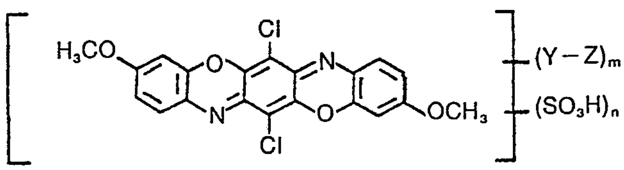

worin Y, Z, m und n die im Anspruch 1 angegebene Bedeutung besitzen.

3. Dioxazin-Reaktivfarbstoffe der Formel

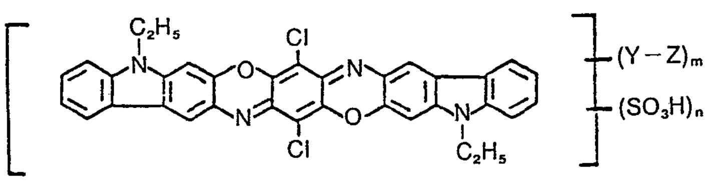

worin Y, Z, m und n die im Anspruch 1 angegebene Bedeutung besitzen.

4. Dioxazin-Reaktivfarbstoffe der Formel

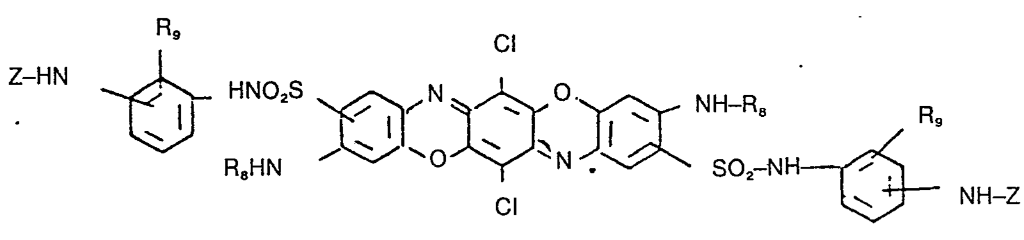

worin

$R_8 = C_1–C_6$-Alkyl, gegebenenfalls substituiert durch $OSO_3H$, $SO_3H$

$R_9 = H$, $CH_3$, $SO_3H$, COOH und

Z die im Anspruch 1 angegebene Bedeutung hat.

5. Dioxazin-Reaktivfarbstoffe gemäss den Formeln aus Ansprüchen 2 und 3, wobei

Y =

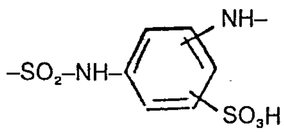

m = 1 oder 2 und

n = 0 bis 2

bedeuten.

6. Verwendung der Reaktivfarbstoffe der Ansprüche 1 bis 5 zum Färben und Bedrucken von hydroxyl- oder amidgruppenhaltigen Fasermaterialien.

7. Verbindungen der Formel

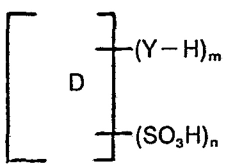

wobei

D, Y, m und n die in Anspruch 1 angegebene Bedeutung haben und H für Wasserstoff steht.

8. Verbindungen des Anspruchs 7 mit

Y =

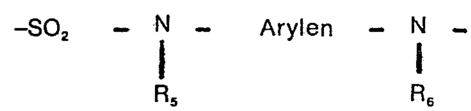

worin

$R_5$, $R_6$ = H, gegebenenfalls durch OH, $SO_3H$, $OSO_3H$ substituiertes $C_1–C_4$-Alkyl.

## Claims

1. Dioxazine reactive dyestuffs of the formula

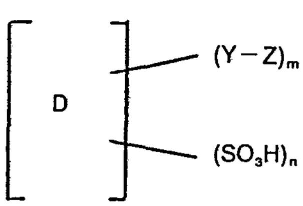

(I)

wherein

D = a mono- or polyvalent radical derived from a dioxazine system of the formula

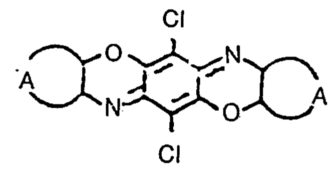

(II)

wherein

A 1–4 fused-on aromatic and/or heterocyclic rings and wherein

Z = a heterocyclic reactive radical,

m = 1 or 2,

n = 0 to 4 and

Y represents one of the following bridge members:

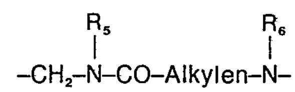

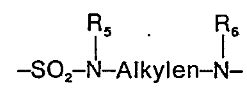

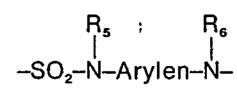

wherein

$R_5$ = H; optionally OH-, $SO_3H$ or $OSO_3H$-substitued $C_1–C_4$-alkyl,

$R_6$ = H; optionally OH-, $SO_3H$- or $OSO_3H$-substituted $C_1–C_4$-alkyl,

alkylene = alkylene radicals or cycloalkylene radicals with 1 to 6 carbon atoms, which can optionally be interrupted by O or S and which can optionally be substituted by OH, $SO_3H$ or $OSO_3H$,

arylene = optionally $C_1–C_4$-alkyl-, halogen-, $SO_3H$-, COOH- or $C_1–C_4$-alkoxy-substituted 1,2-, 1,3- or 1,4-phenylene radical.

2. Dioxazine reactive dyestuffs of the formula

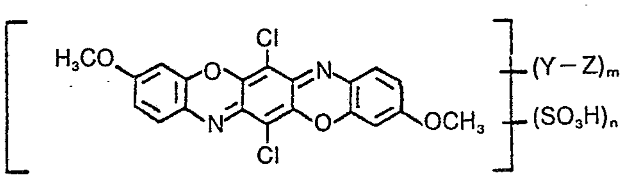

wherein

Y, Z, m and n have the meaning given in Claim 1.

3. Dioxazine reactive dyestuffs of the formula

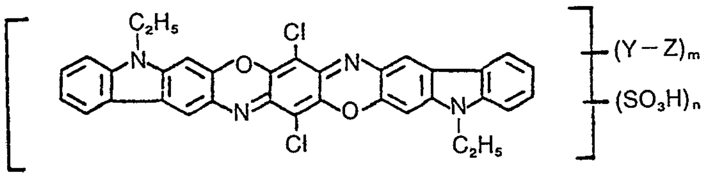

wherein

Y, Z, m and n have the meaning given in Claim 1.

4. Dioxazine reactive dyestuffs of the formula

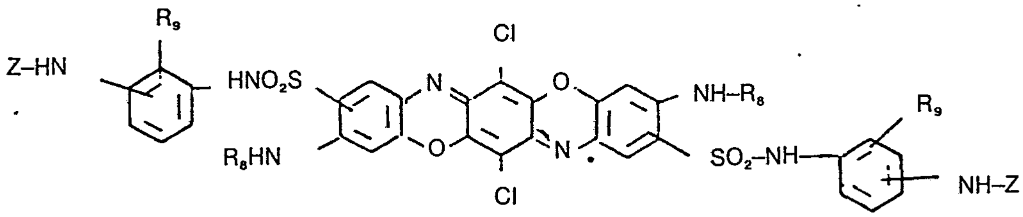

wherein

$R_3 = C_1$–$C_6$-alkyl, optionally substituted by $OSO_3H$ or $SO_3H$,

$R_9 = H$, $CH_3$, $SO_3H$ or COOH and

Z as the meaning given in Claim 1.

5. Dioxazine reactive dyestuffs according to the formulae of Claims 2 and 3,

wherein

Y denotes

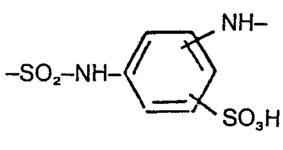

m denotes 1 or 2 and

n denotes 0 to 1.

6. Use of the reactive dyestuffs of Claims 1 to 5 for dyeing and printing fibre materials containing hydroxyl or amide groups.

7. Compounds of the formula

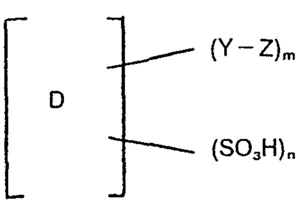

wherein

D, Y, m and n have the meaning given in Claim 1 and H represents hydrogen.

8. Compounds of Claim 7 in which

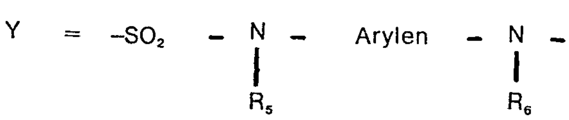

wherein

$R_5$ and $R_6 = H$ or optionally OH-, $SO_3H$- or $OSO_3H$-substituted $C_1$–$C_4$-alkyl.

**Revendications**

1. Colorants réactifs de dioxazines de formule:

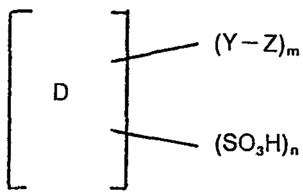

(I)

dans laquelle

D représente un reste mono- ou poly-valent dérivé d'un système de dioxazine de formule

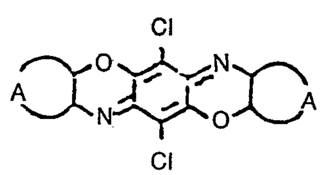

(II)

les symboles utilisés ayant les significations suivantes:

A représente 1 à 4 noyaux aromatiques et/ou hétérocycliques condensés,

Z représente un reste hétérocyclique réactif,

m = 1 ou 2,

n = 0 à 4, et

Y représente l'un des ponts suivants:

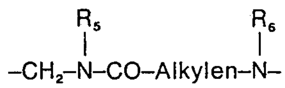

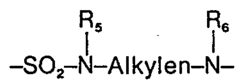

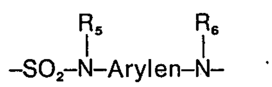

dans lesquels

$R_5$ = H; alkyle en $C_1$–$C_4$ éventuellement substitué par OH, $SO_3H$, $OSO_3H$,

$R_6$ = H; alkyle en $C_1$–$C_4$ éventuellement substitué par OH, $SO_3H$, $OSO_3H$,

«Alkylen» = restes alkylène ou restes cycloalkylène contenant 1 à 6 atomes de carbone, éventuellement interrompus par O ou S et éventuellement substitués par OH, $SO_3H$, $OSO_3H$,

«Arylen» = restes 1,2-, 1,3- ou 1,4-phénylène substitués par alkyle en $C_1$–$C_4$, halogènes, $SO_3H$, COOH, alcoxy en $C_1$–$C_4$.

2. Colorants réactifs en dioxazines de formule:

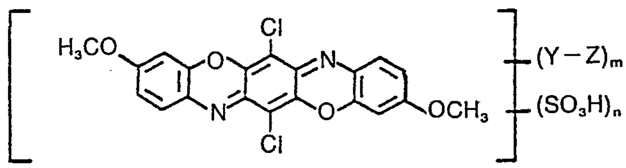

dans laquelle

Y, Z, m et n ont les significations indiquées dans la revendication 1.

3. Colorants réactifs de dioxazines de formule:

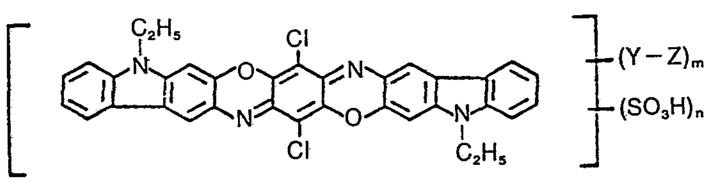

dans laquelle

Y, Z, m et n ont les significations indiquées dans la revendication 1.

4. Colorant réactifs de dioxazines de formule:

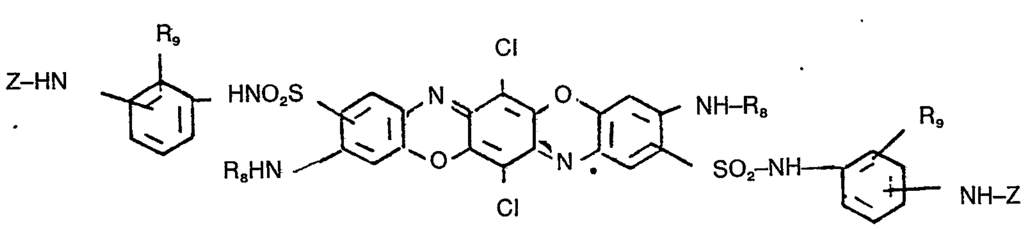

dans laquelle

$R_8$ = alkyle en $C_1$–$C_6$ éventuellement substitué par $OSO_3H$, $SO_3H$,

$R_9$ = H, $CH_3$, $SO_3H$, COOH, et

Z a les significations indiquées dans la revendication 1.

5. Colorants réactifs de dioxazine répondant aux formules des revendications 2 et 3, dans lesquelles

Y = 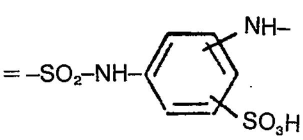

m = 1 ou 2, et

n = 0 et 1.

6. Utilisation des colorants réactifs des revendications 1 à 5 pour la teinture et l'impression de matières fibreuses contenant des groupes hydroxy ou des groupes amide.

7. Composés de formule:

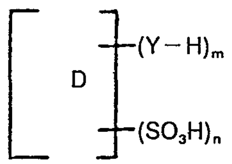

dans laquelle

D, Y, m et n ont les significations indiquées dans la revendication 1 et

H représente l'hydrogène.

8. Composés de la revendication 7, dans lesquels:

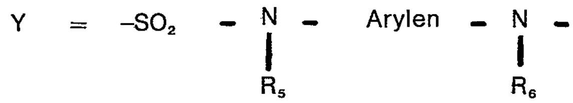

avec

$R_5$, $R_6 = H$, alkyle en $C_1$–$C_4$ éventuellement substitué par OH, $SO_3H$, $OSO_3H$.